# EUROPEAN PATENT APPLICATION

(11) **EP 2 264 111 A1**
(43) Date of publication of application: **22.12.2010**
(21) Application number: 10166242.7
(22) Date of filing: 17.06.2010
(51) Int. Cl.: C09D 11/00

(54) **Ink composition for ink jet recording**

(30) Priority: 19.06.2009 JP 2009146435
(71) Applicant: Seiko Epson Corporation, Shinjuku-ku Tokyo (JP)
(72) Inventor: Koganehira, Shuichi, Suwa-shi Nagano 392-8502 (JP); Kamibayashi, Masashi, Suwa-shi Nagano 392-8502 (JP); Sato, Hironori, Suwa-shi Nagano 392-8502 (JP)
(74) Representative: Grünecker, Kinkeldey, Stockmair & Schwanhäusser Anwaltssozietät

(57) **Abstract**

An ink composition for ink jet recording contains a colorant, water, an alcohol solvent, and a surfactant. The alcohol solvent contains a water-insoluble alkanediol, a water-soluble 1,2-alkanediol, and a water-soluble symmetrical end-capped alkanediol. The surfactant is a gemini surfactant.

## Description

### BACKGROUND

### 1. Technical Field

The present invention relates to an ink composition for ink jet recording. The ink composition is capable of forming high-quality records having no printing defects on various recording media, such as sheets of synthetic paper and printing paper, having low water absorbency.

### 2. Related Art

An ink jet recording method is a printing method in which ink droplets are ejected so as to be applied to a recording medium such as a sheet of paper. Recent innovative advances in ink jet recording techniques have allowed the ink jet recording method to be used to produce high-definition prints which have been obtained only by silver halide photography and offset printing. This has led to the development of ink jet recording inks that can be used to print glossy images comparable to silver halide photographs on glossy recording media, such as sheets of ink jet paper, comparable to sheets of printing paper, art paper, and the like which have been used in the field of silver halide photography and offset printing. Furthermore, the following inks have been developed: ink jet recording inks that can be used to print images with quality comparable to that of silver halide photographs even on sheets of plain paper.

In recent years, techniques for forming images from digital data have been widely used. Therefore, desktop publishing (DTP) is being widely used particularly in the field of printing. Even for DTP printing, color proofs are prepared in advance for the purpose of checking the gloss and color of actual prints. An ink jet recording system is used to output the color proofs and DTP needs to provide prints with high color reproduction and stability; hence, sheets of ink jet paper are generally used as recording media.

The ink jet paper sheets are designed to exhibit gloss and color equivalent to those of outputs printed on sheets of printing paper. Therefore, materials for the ink jet paper sheets are appropriately selected depending on the type of printing paper. However, the production of ink jet paper corresponding to all types of printing paper requires high production costs. For color proof applications, there is a demand that the printing paper sheets rather than the ink jet paper sheets are used for ink jet printing. If final proofs can be directly printed on the printing paper sheets rather than the ink jet paper sheets by ink jet printing, proofreading costs can be significantly reduced. Synthetic paper, which is widely used in the field of printing and is prepared by forming a mixture of an inorganic filler and polyethylene or polyester into a film, is an environmentally friendly material with good recyclability and therefore is recently attracting attention.

A sheet of printing paper such as coated printing paper includes a surface coating for absorbing an oil-based ink and is **characterized in that** the coating has low ink absorbency. Therefore, the use of a water-based pigment ink, which is usually used for ink jet printing, may cause blurs and/or aggregation spots in an image because the water-based pigment ink insufficiently penetrates the recording medium (the printing paper sheet).

In order to solve this problem, for example, JP-A-2005-194500 discloses a pigment which contains a surfactant such as a polysiloxane compound and a dissolution aid such as an alkane diol including 1,2-hexanediol, which is capable of reducing blurs, and which is capable of providing a high gloss on a sheet of specific paper. JP-A-2003-213179, JP-A-2003-253167, and JP-A-2006-249429 propose that the addition of glycerin, a diol alcohol solvent such as 1,3-butanediol, and/or a triol alcohol solvent such as pentanetriol to ink is effective in controlling the penetration of ink to recording media and therefore high-quality images are obtained.

The present inventors have recently found that a high-quality image free from white streaks or roughness can be printed even on a recording medium, such as a sheet of printing paper, having low liquid absorbency at low resolution by the use of a specific surfactant and an alcohol solvent containing a water-insoluble alkanediol, a water-soluble alkanediol, and a water-soluble symmetrical end-capped alkanediol. The present invention is based on the finding.

### SUMMARY

It is conceivable to provide an ink containing a surfactant such as polysiloxane and alcohol solvents such as a water-insoluble alkane diol, a water-soluble alkane diol, and an alkane triol can be used to print a high-quality image free from white streaks or roughness even on a recording medium, such as a sheet of printing paper, having low liquid absorbency at low resolution.

An advantage of some aspects of the invention is to provide an ink composition that can be used to print a high-quality image free from white streaks or roughness even on a recording medium, such as a sheet of printing paper, having low liquid absorbency at low resolution.

An ink composition for ink jet recording according to an embodiment of the present invention contains a colorant, water, an alcohol solvent, and a surfactant. The alcohol solvent contains a water-insoluble alkanediol, a water-soluble 1,2-alkanediol, and a water-soluble symmetrical end-capped alkanediol. The surfactant is a gemini surfactant.

According to the present invention, the following ink composition can be provided: an ink composition that can be used to print a high-quality image free from white streaks or roughness even on a recording medium, such as a sheet of printing paper, having low liquid absorbency at low resolution.

The invention is also directed to the following 28 embodiments:
1. An ink composition for ink jet recording, comprising:
   a colorant;
   water;
   an alcohol solvent; and
   a surfactant,
   wherein the alcohol solvent contains a water-insoluble alkanediol, a water-soluble 1,2-alkanediol, and a water-soluble symmetrical end-capped alkanediol and the surfactant is a gemini surfactant.
2. The ink composition according to Embodiment 1, wherein the gemini surfactant is a double-chain, triple-hydrophilic group surfactant containing a linker having a hydrophilic group and a pair of single-chain surfactant moieties, connected to each other through the linker, having hydrophilic groups.
3. The ink composition according to Embodiment 2, wherein the hydrophilic groups of the single-chain surfactant moieties are acidic amino acid residues.
4. The ink composition according to Embodiment 2, wherein the linker is a basic amino acid residue.
5. The ink composition according to Embodiment 1, wherein the gemini surfactant is represented by the following formula: 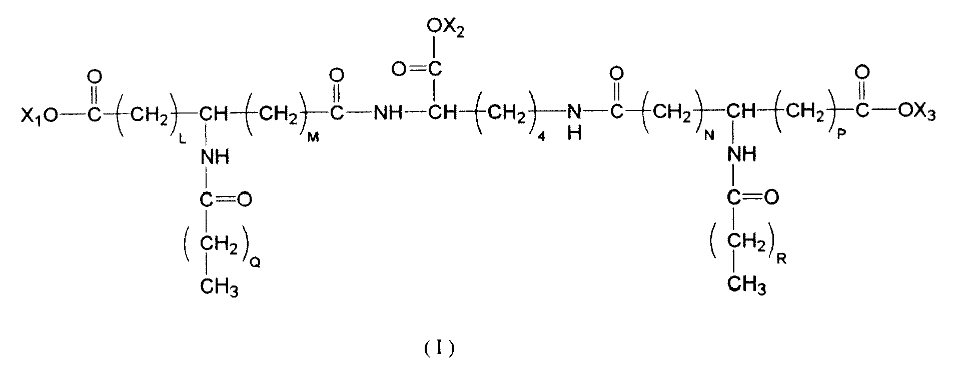 wherein X₁, X₂, and X₃ independently represent a hydrogen atom or an alkali metal but do not simultaneously represent any hydrogen atom or alkali metal; L and M independently represent 0 or 2 but do not simultaneously represent 0 or 2; N and P independently represent 0 or 2 but do not simultaneously represent 0 or 2; and Q and R each represents an integer of 8 to 18.
6. The ink composition according to Embodiment 1, wherein the water-insoluble alkanediol contains seven or more carbon atoms.
7. The ink composition according to Embodiment 1, wherein the water-soluble 1,2-alkanediol contains six or less carbon atoms.
8. The ink composition according to Embodiment 1, wherein the water-soluble symmetrical end-capped alkanediol contains three or more carbon atoms.
9. The ink composition according to Embodiment 1, wherein the ratio of the content of the water-insoluble alkanediol to the content of the water-soluble 1,2-alkanediol in the alcohol solvent ranges from 6:1 to 1:3.
10. The ink composition according to Embodiment 1, wherein the ratio of the content of the water-insoluble alkanediol to the content of the water-soluble symmetrical end-capped alkanediol in the alcohol solvent preferably ranges from 1:1 to 1:18.
11. The ink composition according to Embodiment 1, wherein the sum of the content of the water-soluble symmetrical end-capped alkanediol and the content of the water-soluble 1,2-alkanediol in the ink composition is preferably 6% by weight or less.
12. The ink composition according to Embodiment 1, wherein the sum of the content of the water-insoluble alkanediol and the content of the water-soluble symmetrical end-capped alkanediol in the ink composition is preferably 21% by weight or less.
13. The ink composition according to Embodiment 1, wherein the content of the water-insoluble alkanediol in the ink composition is 1% to 3% by weight.
14. The ink composition according to Embodiment 1, wherein the content of the water-soluble 1,2-alkanediol in the ink composition is 0.5% to 3.0% by weight.
15. The ink composition according to Embodiment 1, wherein the content of the water-soluble symmetrical end-capped alkanediol in the ink composition is 1% to 6% by weight.
16. The ink composition according to Embodiment 1, wherein the water-insoluble alkanediol is 1,2-octanediol.
17. The ink composition according to Embodiment 1, wherein the water-insoluble alkanediol is one or more selected from the group consisting of 1,2-hexanediol, 4-methyl-1,2-pentanediol, and 3,3-dimethyl-1 ,2-butanediol.
18. The ink composition according to Embodiment 1, wherein the water-soluble symmetrical end-capped alkanediol has a branch.
19. The ink composition according to Embodiment 1, wherein the water-soluble symmetrical end-capped alkanediol is one or more selected from the group consisting of 2-methyl-1 ,3-propanediol, 3-methyl-1 ,5-pentanediol, 1,5-pentanediol, and 1,6-hexanediol.
20. The ink composition according to Embodiment 1, wherein the content of the gemini surfactant in the ink composition is 0.01% to 1.0% by weight.
21. The ink composition according to Embodiment 1, wherein the colorant contains a pigment and a dispersant capable of dispersing the pigment in the ink composition.
22. The ink composition according to Embodiment 21, wherein the dispersant contains at least one selected from the group consisting of a styrene-acrylic acid copolymer resin, an oxyethyl acrylate resin, a urethane resin, and a fluorene resin.
23. The ink composition according to Embodiment 22, wherein the content of the dispersant in the ink composition is 20% to 50% by weight.
24. The ink composition according to Embodiment 1, wherein the colorant is a pigment and the pigment has a solid concentration of 9% by weight or more.
25. An ink jet recording method comprising:
   ejecting droplets of the ink composition according to Embodiment 1; and
   applying the droplets to a recording medium to perform printing.
26. The ink jet recording method according to Embodiment 25, wherein the recording medium is a sheet of printing paper or synthetic paper made of a synthetic resin.
27. The ink jet recording method according to Embodiment 26, wherein the printing paper sheet has an area weight of 73.3 to 104.7 g/m².
28. The ink jet recording method according to Embodiment 26, wherein the printing paper sheet has an area weight of 104.7 to 209.2 g/m².

### BRIEF DESCRIPTION OF THE DRAWING

The invention will be described with reference to the accompanying drawing.

The figure is a graph showing the solubility of 1,2-octanediol in each aqueous solution containing an alcohol solvent.

### DESCRIPTION OF EXEMPLARY EMBODIMENTS

An ink composition for ink jet recording according to an embodiment of the present invention contains a colorant, water, an alcohol solvent, and a surfactant. The alcohol solvent contains a water-insoluble alkanediol, a water-soluble 1,2-alkanediol, and a water-soluble symmetrical end-capped alkanediol. The surfactant is a gemini surfactant. Components of the ink composition are described below.

Alkanediols described herein may be linear or branched.

The term "water-soluble" as used herein means that the solubility of a solute in water is 10.0 g or more per 100 g of water at 20°C. The term "water-insoluble" as used herein means that the solubility of a solute in water is less than 1.0 g per 100 g of water at 20°C.

The alcohol solvent, which is contained in the ink composition, contains at least three organic solvent components: the water-insoluble alkanediol, the water-soluble 1,2-alkanediol, and the water-soluble symmetrical end-capped alkanediol. Since the alcohol solvent contains the three organic solvent components, the ink composition is prevented from aggregating, has good ejection stability, and therefore can be used to print a high-quality image free from white streaks or roughness even on a sheet of printing paper, such as art paper, POD paper (for example, Ricoh business coat gloss 100 available from Ricoh Company, Ltd.), or laser printer paper (for example, LPCCTA4 available from by Seiko Epson Co.), having relatively low ink absorbency at low resolution. The term "aggregation" as used herein refers to the local difference in density between similar colors in the case of printing an area (for example, in the case of printing a six inch square area in monochrome (which does not mean the number of ink colors)) and does not mean that a portion uncoated with ink remains in a surface of a recording medium. The term "white streak" as used herein means that there is no local difference in density between similar colors in the case of printing an area (for example, in the case of printing a six inch square area in monochrome) and a line which is uncoated with ink and which extends in the moving direction of a recording head remains in a surface of a recording medium. The term "roughness" or "filling failure" as used herein means that there is no local difference in density between similar colors in the case of printing an area as described above and a surface of a recording medium has a portion uncoated with ink and therefore has irregularities.

According to the present invention, a printed surface of such a recording medium as described above can be prevented from curving inward, that is, a printed surface thereof can be prevented from curling even if the recording medium is a thin sheet of printing paper with an area weight of 104.7 g/m² or less.

The reason why the presence of the water-soluble symmetrical end-capped alkanediol in the alcohol solvent in addition to the water-insoluble alkanediol and the water-soluble 1,2-alkanediol is effective in obtaining a high-quality image free from white streaks or roughness is not clear but is probably as described below.

The aggregation of ink applied to a sheet of printing paper occurs probably because ink dots have a large surface tension, form a large contact angle with a surface of the printing paper sheet, and therefore are repelled by the printing paper sheet. Even in the case where white streaks or filling failure is caused in a low-resolution record, a decrease in the surface tension of ink applied to a surface of a sheet of printing paper reduces the aggregation of ink.

White streaks or filling failure is caused in a low-resolution record probably because adjacent ink dots adhering to a surface of a sheet of printing paper come into contact with each other and spread over the printing paper sheet surface to create interactive flows of undried ink. The interactive ink flows probably result from the difference in drying time between the ink dots depending on the difference in adhering time between the adjacent ink dots and the size of droplets adhering to the printing paper sheet surface. Thus, in order to reduce the aggregation of ink and in order to print a high-quality image free from white streaks or roughness on the printing paper sheet even at low resolution, ink having low surface tension and low fluidity is preferably applied to the printing paper sheet.

When an ink contains no penetrating humectant and therefore has a reduced fluidity, dots of the ink adhering to a surface of a sheet of printing paper is quickly dried and is also rapidly absorbed by the printing paper sheet; hence, the time needed for the ink dots to spread over the surface thereof is short. This probably causes white streaks or filling failure in a low-resolution record.

The water-soluble symmetrical end-capped alkanediol is a viscous substance such as glycerin. The water-soluble symmetrical end-capped alkanediol has a surface tension less than that of glycerin and serves as a penetrating humectant. For example, a 10% aqueous solution of 2-methyl-1,3-propanediol has a surface tension of 57.5 mN/m. A 10% aqueous solution of 3-methyl-1 ,5-butanediol has a surface tension of 45.8 mN/m.

The use of the water-soluble symmetrical end-capped alkanediol in combination with the water-insoluble alkanediol and the water-soluble 1,2-alkanediol allows the ink composition to have improved ejection stability. An increase in the number of carbon atoms in the water-soluble symmetrical end-capped alkanediol allows the ink composition to have better ejection stability.

The reason for that the water-soluble symmetrical end-capped alkanediol in combination with the water-insoluble alkanediol and the water-soluble 1,2-alkanediol is effective in preventing a printed thin sheet of printing paper from curling is not clear but is probably as described below. Since the water-soluble 1,2-alkanediol is a polar solvent and functions as a coating aid for resins, the water-soluble 1,2-alkanediol promotes the shrinkage of a resin contained in an ink adhering to a recording medium. When the ink contains a small amount of such a polar solvent, the fixability of the ink to a recording medium is possibly insufficient. In contrast, the water-soluble symmetrical end-capped alkanediol is a nonpolar solvent and inhibits resins from forming films; hence, the shrinkage of the resin contained in the ink can be prevented. When an ink contains an excessively large amount of such a nonpolar solvent, the fixability of the ink to a recording medium is possibly insufficient.

The water-insoluble alkanediol preferably contains seven or more carbon atoms and more preferably seven to ten carbon atoms. Preferred examples of the water-insoluble alkanediol include 1,2-heptanediol, 1,2-octanediol, 5-methyl-1,2-hexanediol, 4-methyl-1,2-hexanediol, and 4,4-dimethyl-1 ,2-pentanediol. In particular, 1,2-octanediol is preferred.

The water-soluble 1,2-alkanediol preferably contains six or less carbon atoms. Preferred examples of the water-soluble 1,2-alkanediol include 1,2-hexanediol, 1,2-pentanediol, 1,2-butanediol, 4-methyl-1,2-pentanediol, and 3,3-dimethyl-1,2-butanediol. A 15% aqueous solution of the water-soluble 1,2-alkanediol preferably has a surface tension of 28 mN/m or less. Therefore, 1,2-hexanediol, 4-methyl-1,2-pentanediol, and 3,3-dimethyl-1,2-butanediol are particularly preferred because a 15% aqueous solution of 1,2-hexanediol has a surface tension of 26.7 mN/m, a 15% aqueous solution of 4-methyl 1,2-pentanediol has a surface tension of 25.4 mN/m, and a 15% aqueous solution of 3,3-dimethyl-1,2-butanediol has a surface tension of 26.1 mN/m. In view of odor during printing, 1,2-hexanediol is preferred.

The water-soluble symmetrical end-capped alkanediol preferably contain three or more carbon atoms and more preferably four to six carbon atoms. The water-soluble symmetrical end-capped alkanediol may have a branch. The term "symmetrical alkanediol" as used herein refers to an end-capped alkanediol which contains an alkyl chain and hydroxy groups located at both ends of the alkyl chain and which has a symmetry plane, as well as that of 1,5-pentanediol, equidistant from the hydroxy groups. Examples of the water-soluble symmetrical end-capped alkanediol include 2-methyl-1,3-propanediol, 3-methyl-1,5-pentanediol, 1,5-pentanediol, and 1,6-hexanediol.

In view of ejection stability, the water-soluble symmetrical end-capped alkanediol preferably contains a large number of carbon atoms. Water-soluble symmetrical end-capped alkanediols, such as 3-methyl-1,5-pentanediol and 1,6-hexanediol, containing six carbon atoms have a high ability to dissolve a water-insoluble alkanediol in water and therefore are useful in improving ejection stability. In particular, 1,6-hexanediol is good in ejection stability and is particularly good in dissolving the clogging of ink jet recording apparatuses.

In view of handling during ink production, the water-soluble symmetrical end-capped alkanediol is preferably liquid at room temperature. Therefore, the water-soluble symmetrical end-capped alkanediol is preferably, for example, 1,5-pentanediol or 3-methyl-1,5-pentanediol rather than 2-methyl-1,3-propanediol, which is relatively volatile.

The ratio of the content of the water-insoluble alkanediol to the content of the water-soluble 1,2-alkanediol in the alcohol solvent preferably ranges from 6:1 to 1:3 and more preferably from 6:1 to 1:1. This allows the water-insoluble alkanediol to be stably dissolved in ink, leading to the improvement of ejection stability. When the proportion of the water-soluble 1,2-alkanediol is greater than the preferable range, it is difficult to balance a reduction in the initial viscosity of ink and a reduction in aggregation spots. When the proportion of the water-soluble 1,2-alkanediol is less than the preferable range, it is difficult to stably dissolve the water-insoluble alkanediol in ink, it is difficult to reduce a time-dependent change in viscosity, and/or it is difficult to maintain storage stability.

The ratio of the content of the water-insoluble alkanediol to the content of the water-soluble symmetrical end-capped alkanediol in the alcohol solvent preferably ranges from 1:1 to 1:18 and more preferably from 1:1 to 1:6. This allows ink to have increased ejection stability. When the proportion of the water-soluble symmetrical end-capped alkanediol is greater than the preferable range, ink has high initial viscosity and a low drying ability. When the proportion of the water-soluble symmetrical end-capped alkanediol is less than the preferable range, ink has a low ability to eliminate clogging and a high drying ability and therefore the time needed for the ink to spread cannot be secured; hence, a recording medium is prevented from being coated with the ink and therefore white streaks are likely to be caused.

The ratio of the content of the water-soluble 1,2-alkanediol to the content of the water-soluble symmetrical end-capped alkanediol in the alcohol solvent preferably ranges from 1:2 to 1:12 and more preferably from 1:6 to 1:12. This can prevent white streaks and roughness from being caused in low-resolution prints with sheets of printing paper. When the proportion of the water-soluble symmetrical end-capped alkanediol is greater than the preferable range, ink has high initial viscosity and a low drying ability. When the proportion of the water-soluble symmetrical end-capped alkanediol is less than the preferable range, ink has a low ability to eliminate clogging and a high drying ability and therefore the time needed for the ink to spread cannot be secured; hence, a recording medium is prevented from being coated with the ink and therefore white streaks are likely to be caused.

The content of the water-insoluble alkanediol in the ink composition is preferably 1% to 3% and more preferably 1.5% to 2.5% on a weight basis. When the content thereof is less than 1 % by weight, aggregation spots are possibly caused on recording media, such as sheets of printing paper, having low ink absorbency. When the content thereof is greater than 3% by weight, the water-insoluble alkanediol is not completely dissolved in the ink composition in some cases.

The content of the water-soluble 1,2-alkanediol in the ink composition is preferably 0.5% to 3% and more preferably 0.5% to 2% on a weight basis. When the content thereof is less than 0.5% by weight, the water-insoluble alkanediol is not completely dissolved in the ink composition in some cases. When the content thereof is greater than 3% by weight, the ink composition possibly has high initial viscosity, which is not preferred.

The content of the water-soluble symmetrical end-capped alkanediol in the ink composition is preferably 1% to 6% by weight. When the content thereof is less than 1% by weight, the ink composition possibly has insufficient ejection stability. When the content thereof is greater than 6% by weight, the ink composition possibly has high initial viscosity and therefore has insufficient ejection stability.

The sum of the content of the water-soluble symmetrical end-capped alkanediol and the content of the water-soluble 1,2-alkanediol in the ink composition is preferably 6% by weight or less. This prevents aggregation spots from being caused on recording media, such as sheets of printing paper, having low ink absorbency and allows the ink composition to have good ejection stability.

The sum of the content of the water-insoluble alkanediol and the content of the water-soluble symmetrical end-capped alkanediol in the ink composition is preferably 21% by weight or less. This prevents aggregation spots from being caused on recording media, such as sheets of printing paper, having low ink absorbency and allows the ink composition to have good ejection stability and a good ability to prevent curling.

The ink composition contains the gemini surfactant, which is an essential component. The use of the gemini surfactant in combination with the alcohol solvent allows a water-insoluble solvent to be uniformly dispersed, leading to a reduction in the initial viscosity of ink. This allows the content of the colorant in the ink composition and/or that of an anti-clogging agent in the ink composition to be increased. Therefore, an image with good color developability can be formed not only on a sheet of plain paper but also on a recording medium having a porous surface coated with resin or particles for absorbing ink. Even in the case of using a recording medium such as a sheet of printing paper including a surface absorption layer including a coating for absorbing an oil-based ink, color bleeding can be prevented and the flow of ink between dots can be prevented from causing uneven color density which can occur with an increase in the amount of ink deposited. The reason for this is not clear but is probably because the gemini surfactant and the water-insoluble solvent form extremely stable oil gel because of the good orientation of the gemini surfactant and therefore the colorant loses fluidity. Thus, the effect of the use of the gemini surfactant can be enjoyed when the amount of the water-insoluble solvent is large. The term "gemini surfactant" as used herein refers to a surfactant having a structure in which two surfactant moieties are connected to each other through a linker.

The gemini surfactant is preferably a double-chain, triple-hydrophilic group surfactant containing a linker having a hydrophilic group and a pair of single-chain surfactant moieties, connected to each other through the linker, having hydrophilic groups. The hydrophilic groups of the single-chain surfactant moieties are preferably acidic amino acid residues. The linker is preferably a basic amino acid residue. In particular, the hydrophilic groups of the single-chain surfactant moieties are preferably glutamic or aspartic acid residues and the linker is preferably an arginine, lysine, or histidine residue. The gemini surfactant is preferably represented by the following formula: 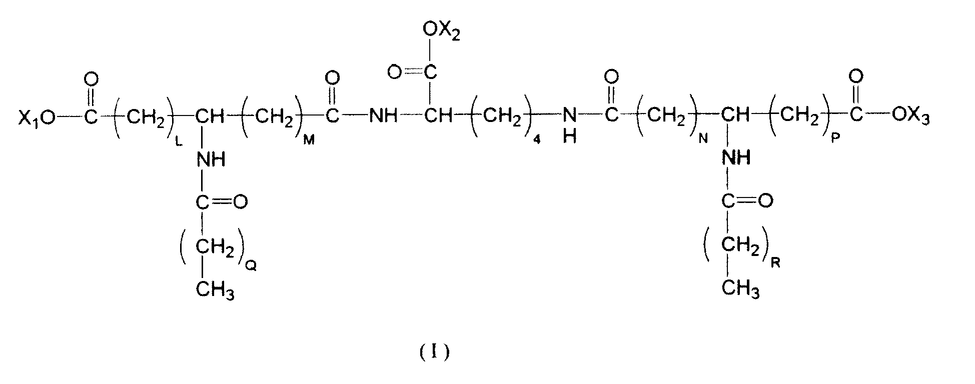 wherein X₁, X₂, and X₃ independently represent a hydrogen atom or an alkali metal but do not simultaneously represent any hydrogen atom or alkali metal; L and M independently represent 0 or 2 but do not simultaneously represent 0 or 2; N and P independently represent 0 or 2 but N and P do not simultaneously represent 0 or 2; and Q and R each represents an integer of 8 to 18.

In Formula (I), the alkali metal is preferably sodium and Q and R are preferably 10. An example of the gemini surfactant is a sodium salt of a condensation product of N-lauroyl-L-glutamic acid with L-lysine. The gemini surfactant may be a commercially available product. For example, an aqueous solution, Pellicer L-30, available from Asahi Kasei Chemicals Corporation is preferably used. The aqueous solution Pellicer L-30 contains 30% of the sodium salt of the condensation product of N-lauroyl-L-glutamic acid with L-lysine.

The use of the gemini surfactant allows the ink composition to have high wettability to a recording medium on which a record image is formed and high permeability to the recording medium. Therefore, the uneven aggregation of ink can be improved even in the case of printing an image on a recording medium such as a sheet of printing paper. Since the ink composition contains the three alcohol solvent components, the solubility of the gemini surfactant in ink is high and the production of insoluble matter can be prevented. This allows the ink composition to have good ejection stability.

The ink composition may further contain a known surfactant such as an organopolysiloxane surfactant, an acetylene glycol surfactant, an anionic surfactant, a nonionic surfactant, or an amphoteric surfactant. The organopolysiloxane surfactant may be a commercially available product such as Olfine PD-501, PD-502, or PD-570 available from Nissin Chemical Industry Co., Ltd. Examples of the acetylene glycol surfactant include 2,4,7,9-tetramethyl-5-decyne-4,7-diol, 3,6-dimethyl-4-octyne-3,6-diol, 3,5-dimethyl-1-hexyne-3-ol, and 2,4-dimethyl-5-hexyne-3-ol. The acetylene glycol surfactant may be a commercially available product such as Olfine E1010, STG, or Y available from Nissin Chemical Industry Co., Ltd. or Surfynol 61, 104, 82, 465, 485, or TG available from Air Products and Chemicals, Inc.

The colorant, which is contained in the ink composition, may be a dye or a pigment. The pigment is preferred in view of light resistance and water resistance.

Examples of the pigment include inorganic pigments and organic pigments, which may be used alone or in combination. Examples of the inorganic pigments include titanium oxide, iron oxide, and carbon black produced by a known process such as a contact process, a furnace process, or a thermal process. Examples of the organic pigments include azo pigments such as azo lake, insoluble azo pigments, condensed azo pigments, and chelate azo pigments; polycyclic pigments such as phthalocyanine pigments, perylene pigments, perinone pigments, anthraquinone pigments, quinacridone pigments, dioxazine pigments, thioindigo pigments isoindolinone pigments, and quinophralone pigments; dye chelates such as basic dye chelates and acidic dye chelates; nitro pigments; nitroso pigments; and aniline black.

The pigment is appropriately selected depending on the type or color of the ink composition. When the ink composition is yellow, the pigment is at least one selected from the group consisting of C. I. Pigment Yellows 1, 2, 3, 12, 14, 16, 17, 73, 74, 75, 83, 93, 95, 97, 98, 109, 110, 114, 128, 129, 138, 139, 147, 150, 151, 154, 155, 180, and 185. In particular, one or more selected from the group consisting of C. I. Pigment Yellows 74, 110, 128, and 147 are preferably used. When the ink composition is magenta, the pigment is at least one selected from the group consisting of C. I. Pigment Reds 5, 7, 12, 48 (Ca), 48 (Mn), 57 (Ca), 57:1, 112, 122, 123, 168, 184, 202, and 209 and C. I. Pigment Violet 19. In particular, one or more selected from the group consisting of C. I. Pigment Reds 122, 202, and 209 and C. I. Pigment Violet 19 are preferably used. When the ink composition is cyan, the pigment is at least one selected from the group consisting of C. I. Pigment Blues 1, 2, 3, 15:3, 15:4, 15:34, 16, 22, and 60 and C. I. Vat Blues 4 and 60, which may be used alone or in combination. In particular, C. I. Pigment Blue 15:3 and/or 15:4 is preferably used. In more particular, C. I. Pigment Blue 15:3 is preferably used.

When the ink composition is black, the pigment is at least one selected from the group consisting of carbons such as lampblack (C. I. Pigment Black 6), acetylene black, furnace black (C. I. Pigment Black 7), channel black (C. I. Pigment Black 7), and carbon black (C. I. Pigment Black 7); inorganic pigments such as iron oxide pigments; and organic pigments such as aniline black (C. I. Pigment Black 1). In particular, carbon black is preferably used herein. Examples of carbon black useful herein include Carbon Blacks #2650, #2600, #2300, #2200, #1000, #980, #970, #966, #960, #950, #900, #850, MCF-88, #55, #52, #47, #45, #45L, #44, #33, #32, and #30 available from Mitsubishi Chemical Co.; Special Blacks 4A and 550 and Printexes 95, 90, 85, 80, 75, 45, and 40 available from Degussa AG; Regal 660, Rmogul L, and Monarchs 1400, 1300, 1100, 800, and 900 available from Cabot Corporation; and Ravens 7000, 5750, 5250, 3500, 2500 ULTRA, 2000, 1500, 1255, 1200, 1190 ULTRA, 1170, 1100 ULTRA, and 5000 UIII available from Columbian Chemicals Co.

The content of the pigment in the ink composition is not particularly limited and may be appropriately adjusted when the ink composition is prepared. The pigment preferably has a solid concentration of 9% or more and more preferably 12% or more on a weight basis. After droplets of the ink composition adhere to a recording medium, the ink composition spreads over a surface of the recording medium. When the solid concentration of the pigment is 9% by weight or more, the ink composition loses fluidity immediately after the ink composition spreads over the recording medium surface. Thus, blurring can be prevented from occurring in an image printed on a recording medium such as a sheet of printing paper at low resolution using the ink composition. That is, the use of the three alcohol solvent components in combination allows the ink composition to be spread even over a recording medium having low ink absorbency. In addition, an increase in the solid concentration of the ink composition allows the ink composition to have low fluidity on a recording medium, thereby preventing blurring. In particular, the effect of preventing blurring is remarkable at the boundary between a portion of a recording medium that has a large amount of the ink composition and a portion of the recording medium that has a small amount of the ink composition.

In view of the balance between the gloss of images, the prevention of bronzing, and the storage stability of the ink composition and the formation of more glossy color images, the pigment is preferably kneaded with a dispersant below.

The ink composition preferably further contains the dispersant. The dispersant is used to disperse the colorant and preferably contains at least one selected from the group consisting of a styrene-acrylic acid copolymer resin, an oxyethyl acrylate resin, a urethane resin, and a fluorene resin. These resins are adsorbed on the pigment to improve the dispersibility of the pigment.

Examples of a hydrophobic monomer for producing the copolymer resin include methyl acrylate, methyl methacrylate, ethyl acrylate, ethyl methacrylate, n-propyl acrylate, n-propyl methacrylate, iso-propyl acrylate, iso-propyl methacrylate, n-butyl acrylate, n-butyl methacrylate, sec-butyl acrylate, sec-butyl methacrylate, tert-butyl acrylate, tert-butyl methacrylate, n-hexyl acrylate, n-hexyl methacrylate, n-octyl acrylate, n-octyl methacrylate, iso-octyl acrylate, iso-octyl methacrylate, 2-ethylhexyl acrylate, 2-ethylhexyl methacrylate, decyl acrylate, decyl methacrylate, lauryl acrylate, lauryl methacrylate, stearyl acrylate, stearyl methacrylate, 2-hydroxyethyl acrylate, 2-hydroxyethyl methacrylate, 2-hydroxypropyl acrylate, 2-hydroxypropyl methacrylate, 2-dimethylaminoethyl acrylate, 2-dimethylaminoethyl methacrylate, 2-diethylaminoethyl acrylate, 2-diethylaminoethyl methacrylate, glycidyl acrylate, glycidyl methacrylate, allyl acrylate, allyl methacrylate, cyclohexyl acrylate, cyclohexyl methacrylate, phenyl acrylate, phenyl methacrylate, nonylphenyl acrylate, nonylphenyl methacrylate, benzyl acrylate, benzyl methacrylate, dicyclopentenyl acrylate, dicyclopentenyl methacrylate, bornyl acrylate, bornyl methacrylate, 1,3-butanediol diacrylate, 1,3-butanediol dimethacrylate, 1,4-butanediol diacrylate, 1,4-butanediol dimethacrylate, ethylene glycol diacrylate, ethylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, polyethylene glycol diacrylate, polyethylene glycol dimethacrylate, neopentyl glycol diacrylate, 1,6-hexanediol diacrylate, 1,6-hexanediol dimethacrylate, dipropylene glycol diacrylate, dipropylene glycol dimethacrylate, trimethylolpropane triacrylate, trimethylolpropane trimethacrylate, glycerol acrylate, glycerol methacrylate, styrene, methylstyrene, vinyltoluene, and hydroxyethylated orthophenylphenol acrylate. These monomers may be used alone or in combination.

Examples of a hydrophilic monomer for producing the copolymer resin include acrylic acid, methacrylic acid, maleic acid, and itaconic acid.

In view of the balance between the gloss of color images, the prevention of bronzing, and the storage stability of the ink composition and the formation of more glossy color images, the copolymer resin, which is produced from the hydrophobic monomer and the hydrophilic monomer, is preferably at least one selected from the group consisting of a styrene-(meth)acrylic acid copolymer resin, a styrene-methylstyrene-(meth)acrylic acid copolymer resin, a styrene-maleic acid copolymer resin, a (meth)acrylic acid-(meth)acrylate copolymer resin, a styrene-(meth)acrylic acid-(meth)acrylate copolymer resin, and a hydroxyethylated orthophenylphenol acrylate-(meth)acrylic acid copolymer resin.

The copolymer resin may be a resin (a styrene-acrylic resin) containing a polymer produced by the reaction of styrene with acrylic acid or an acrylate. Alternatively, the copolymer resin may be a water-soluble acrylic resin or a sodium, potassium, ammonium, triethanolamine, triisopropanolamine, triethylamine, or diethanolamine salt of one of these resins.

In view of the balance between the gloss of color images, the prevention of bronzing, and the storage stability of the ink composition and the formation of more glossy color images, the copolymer resin preferably has an acid value of 50 to 320 and more preferably 100 to 250.

In view of the balance between the gloss of color images, the prevention of bronzing, and the storage stability of the ink composition and the formation of more glossy color images, the copolymer resin preferably has a weight-average molecular weight (Mw) of 2,000 to 30,000 and more preferably 2,000 to 20,000.

In view of the balance between the gloss of color images, the prevention of bronzing, and the storage stability of the ink composition and the formation of more glossy color images, the copolymer resin preferably has a glass transition temperature (Tg) of 30°C or higher and more preferably 50°C to 130°C as determined in accordance with JIS K 6900.

In view of the balance between the gloss of color images, the prevention of bronzing, and the storage stability of the ink composition and the formation of more glossy color images, the amount of the copolymer resin content is preferably 20 to 50 parts by weight and more preferably 20 to 40 parts by weight per 100 parts by weight of the pigment.

The oxyethyl acrylate resin can be used instead of the copolymer resin. The use of the oxyethyl acrylate resin allows the ink composition to have a reduced initial viscosity and good high-temperature storage stability and is effective in eliminating clogging and therefore is preferred.

The oxyethyl acrylate resin is not particularly limited and is preferably a compound represented by Formula (II) below. The compound represented by Formula (II) may be a resin containing, for example, 45% to 55% ortho-hydroxyethylated phenylphenol acrylate (CAS No. 72009-86-0), 20% to 30% acrylic acid (CAS No. 79-10-7), and 20% to 30% methacrylic acid (CAS No. 79-41-4) on a mole basis. These monomers may be used alone or in combination. The monomer composition is not particularly limited and is preferably that the percentage of the ortho-hydroxyethylated phenylphenol acrylate (CAS No. 72009-86-0) be 70% to 85%, the percentage acrylic acid (CAS No. 79-10-7) be 5% to 15%, and the percentage methacrylic acid (CAS No. 79-41-4) be 10% to 20%.

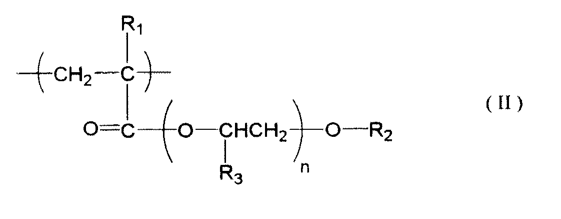

In Formula (II), R₁ and R₃ are a hydrogen atom or a methyl group, R₂ is an alkyl or aryl group, and n is an integer of 1 or more.

The compound represented by Formula (II) is preferably nonylphenoxypolyethylene glycol acrylate or polypropylene glycol #700 acrylate.

In view of the balance between the initial viscosity and storage stability of the ink composition, the prevention of uneven aggregation, and the formation of glossy color images with good coverage, the amount of the oxyethyl acrylate resin content is preferably 10 to 40 parts by weight and more preferably 15 to 25 parts by weight per 100 parts by weight of the pigment.

In view of the balance between the initial viscosity of and storage stability of the ink composition and the elimination of clogging, the percentage of moieties, derived from a monomer selected from the group consisting of acrylic acid and methacrylic acid, having a hydroxy group in the oxyethyl acrylate resin is preferably 30% to 70% and more preferably 40% to 60%.

In view of the balance between the initial viscosity of and storage stability of the ink composition, the uncrosslinked oxyethyl acrylate resin preferably has a number-average molecular weight (Mn) of 4,000 to 9,000 and more preferably 5,000 to 8,000 as determined by, for example, gel permeation chromatography (hereinafter referred to as GPC).

The oxyethyl acrylate resin is adsorbed on or desorbed from the pigment dispersed in a liquid. In view of the balance between the gloss of color images, the prevention of bronzing, and the storage stability of the ink composition and the formation of more glossy color images, the oxyethyl acrylate resin preferably has a maximum particle size of 0.3 µm or less and an average particle size of 0.2 µm or less and more preferably 0.1 µm or less. The average particle size is the mean diameter (cumulative 50% diameter) of particles formed by the pigment in a dispersion and can be determined with, for example, an analyzer, Microtrac UPA, available from Microtrac Inc.

In view of the balance between the gloss of color images, the prevention of bronzing, and the storage stability of the ink composition and the formation of more glossy color images, the amount of the oxyethyl acrylate resin content is preferably 20 to 50 parts by weight and more preferably 20 to 40 parts by weight per 100 parts by weight of the pigment.

When the fixable pigment dispersant contains the urethane resin, the gloss of color images, the prevention of bronzing, and the storage stability of the ink composition can be balanced and more glossy color images can be formed. The urethane resin is a resin containing a polymer obtained by the reaction of a diisocyanate with a diol and preferably contains urethane bonds and/or amide bonds and an acidic group.

Examples of the diisocyanate include aliphatic diisocyanates such as hexamethylene diisocyanate and 2,2,4-trimethylhexamethylene diisocyanate, aromatic diisocyanates such as tolylene diisocyanate and diphenylmethane diisocyanate, and modifications of these cyanates.

Examples of the diol include polyethers such as polyethylene glycol and polypropylene glycol, polyesters such as poly(ethylene adipate) and poly(butylene adipate), and polycarbonates.

In view of the balance between the gloss of color images, the prevention of bronzing, and the storage stability of the ink composition and the formation of more glossy color images, the urethane resin preferably has an acid value of 10 to 300 and more preferably 20 to 100. The term "acid value" as used herein is defined as the amount (mg) of potassium hydroxide required to neutralize 1 g of resin.

In view of the balance between the gloss of color images, the prevention of bronzing, and the storage stability of the ink composition and the formation of more glossy color images, the uncrosslinked urethane resin preferably has a number-average molecular weight (Mn) of 100 to 200,000 and more preferably 1,000 to 50,000 as determined by, for example, GPC.

In view of the balance between the gloss of color images, the prevention of bronzing, and the storage stability of the ink composition and the formation of more glossy color images, the urethane resin preferably has a glass transition temperature (Tg) of -50°C to 200°C and more preferably -50°C to 100°C as determined in accordance with JIS K 6900.

The urethane resin preferably contains a carboxyl group.

In view of the balance between the gloss of color images, the prevention of bronzing, and the storage stability of the ink composition and the formation of more glossy color images, the amount of the urethane resin content is preferably 20 to 50 parts by weight and more preferably 20 to 40 parts by weight per 100 parts by weight of the pigment.

The fixable pigment dispersant may contain the fluorene resin. The content of the fluorene resin allows the ink composition to have a reduced initial viscosity, good high-temperature storage stability, and good fixability to a sheet of printing paper and therefore is preferred.

The fluorene resin is not particularly limited and may be any resin having a fluorene backbone. The fluorene resin can be produced by the copolymerization of the following monomers: 5-isocyanate-1-(isocyanatemethyl)-1,3,3-trimethylcyclohexane (CAS No. 4098-71-9), 2,2'-[9H-fluorene-9-ylidenebis(4,1-phenyleneoxy)]bisethanol (CAS No. 117344-32-8), 3-hydroxy-2-(hydroxymethyl)-2-methyl-propionic acid (CAS No. 4767-03-7), and N,N-diethyl-ethanamine (CAS No. 121-44-8).

The fluorene resin is not limited. The monomer composition is not particularly limited and is preferably that the percentage of 3-hydroxy-2-(hydroxymethyl)-2-methyl-propionic acid (CAS No. 4767-03-7) be 35% to 45%, the percentage of 2,2'-[9H-fluorene-9-ylidenebis(4,1-phenyleneoxy)]bisethanol (CAS No. 117344-32-8) be 40% to 50%, the percentage of 3-hydroxy-2-(hydroxymethyl)-2-methyl-propionic acid (CAS No. 4767-03-7) be 5% to 15%, and the percentage of N,N-diethyl-ethanamine (CAS No. 121-44-8) be 5% to 10%.

In view of the balance between the initial viscosity and storage stability of the ink composition, the uncrosslinked fluorene resin preferably has a number-average molecular weight (Mn) of 2,000 to 5,000 and more preferably 3,000 to 4,000 as determined by, for example, GPC.

In view of the balance between the fixability of color images, the prevention of bronzing, and the storage stability of the ink composition and the formation of more glossy color images, the amount of the fluorene resin content is preferably 20 to 50 parts by weight and more preferably 20 to 40 parts by weight per 100 parts by weight of the pigment.

The copolymer resin and the fixable pigment dispersing resin are adsorbed on or desorbed from the pigment dispersed in a liquid. In view of the balance between the gloss of color images, the prevention of bronzing, and the storage stability of the ink composition and the formation of more glossy color images, the copolymer resin preferably has a maximum particle size of 0.3 µm or less and an average particle size of 0.2 µm or less and more preferably 0.1 µm or less. The term "average particle size" as used herein is defined as the mean diameter (cumulative 50% diameter) of particles of a pigment in a dispersion. The average particle size of the pigment can be determined with, for example, an analyzer, Microtrac UPA, available from Microtrac Inc.

The weight ratio (the former/the latter) of the copolymer resin to the fixable pigment dispersing resin (urethane resin and fluorene resin) preferably ranges from 1:2 to 2:1 and more preferably 1:1.5 to 1.5:1 in view of the balance between the gloss of color images, the prevention of bronzing, and the storage stability of the ink composition and the formation of more glossy color images.

In view of the balance between the gloss of color images, the prevention of bronzing, and the storage stability of the ink composition and the formation of more glossy color images, the weight ratio of a solid component of the pigment to solid components other than the pigment solid component preferably ranges from 100:40 to 100:80.

In view of the balance between the gloss of color images, the prevention of bronzing, and the storage stability of the ink composition and the formation of more glossy color images, the amount of the dispersant content is preferably 90 parts by weight or less and more preferably 70 parts by weight or less per 100 parts by weight of the pigment.

The dispersant may be a surfactant. Examples of the surfactant include anionic surfactants such as fatty acid salts, higher alkyl dicarboxylates, higher alcohol sulfates, higher alkyl sulfonates, condensates of higher fatty acids and amino acids, sulfosuccinates, naphthenates, liquid fatty oil sulfates, and alkylallyl sulfonates; cationic surfactants such as fatty acid amine salts, quaternary ammonium salts, sulfonium salts, and phosphonium salts; and nonionic surfactants such as polyoxyethylene alkyl ethers, polyoxyethylene alkyl esters, sorbitan alkyl esters, and polyoxyethylene sorbitan alkyl esters. The surfactant functions well in the ink composition.

The ink composition contains water, which serves as a solvent, in addition to the colorant, the alcohol solvent, and the surfactant. The water contained in the ink composition is preferably pure or ultrapure water such as ion-exchanged water, ultrafiltered water, reverse osmosis water, or distilled water. In particular, water sterilized, for example, by ultraviolet irradiation or the addition of hydrogen peroxide is free from mold or bacteria for a long period of time and therefore is preferred.

The ink composition preferably further contains a penetrant.

The penetrant is preferably a glycol ether.

Examples of the glycol ether include ethylene glycol monomethyl ether, ethylene glycol monoethyl ether, ethylene glycol mono-iso-propyl ether, ethylene glycol mono-n-butyl ether, ethylene glycol mono-iso-butyl ether, ethylene glycol mono-tert-butyl ether, ethylene glycol monomethyl ether acetate, diethylene glycol monomethyl ether, diethylene glycol monoethyl ether, diethylene glycol mono-n-propyl ether, diethylene glycol mono-iso-propyl ether, diethylene glycol mono-n-butyl ether, diethylene glycol mono-tert-butyl ether, triethylene glycol mono-n-butyl ether, propylene glycol monomethyl ether, propylene glycol monoethyl ether, propylene glycol mono-n-propyl ether, propylene glycol mono-iso-propyl ether, propylene glycol mono-n-butyl ether, propylene glycol mono-tert-butyl ether, dipropylene glycol monomethyl ether, dipropylene glycol monoethyl ether, dipropylene glycol mono-n-propyl ether, dipropylene glycol iso-propyl ether, dipropylene glycol mono-n-butyl ether, dipropylene glycol mono-tert-butyl ether, and 1-methyl-1-methoxybutanol. These ethers may be used alone or in combination.

Among the above glycol ethers, alkyl ethers of polyols are preferred. In particular, the following ethers are preferred: ethylene glycol monoethyl ether, ethylene glycol mono-n-butyl ether, diethylene glycol monomethyl ether, diethylene glycol monoethyl ether, diethylene glycol mono-n-butyl ether, propylene glycol monomethyl ether, propylene glycol monoethyl ether, propylene glycol monobutyl ether, triethylene glycol monomethyl ether, triethylene glycol monoethyl ether, and triethylene glycol mono-n-butyl ether. Triethylene glycol monomethyl ether and triethylene glycol mono-n-butyl ether are more preferred.

The content of the penetrant in the ink composition may be appropriately determined and is preferably about 0.1 % to 30% and more preferably about 1% to 20% on a weight basis.

The ink composition preferably further contains a recording medium solubilizer.

The recording medium solubilizer may be a pyrrolidone such as N-methyl-2-pyrrolidone. The content of the recording medium solubilizer in the ink composition may be appropriately determined and is preferably about 0.1 % to 30% and more preferably about 1% to 20% on a weight basis.

The ink composition is preferably free from any humectant. Humectants have a function of preventing ink from being dried and solidified in ink jet nozzles. Therefore, after droplets of an ink containing a humectant are applied to a sheet of synthetic paper having particularly low ink absorbency, the ink droplets are not dried. This may cause a problem in high-speed printing. For the use of the humectant-containing ink, while unabsorbed droplets of the humectant-containing ink remain on a recording medium, subsequent droplets of the humectant-containing ink are applied to the recording medium. This may cause uneven aggregation. Thus, in the case of using a recording medium having particularly low ink absorbency is used, the ink composition preferably contains substantially no humectant. Even if ink is dried and solidified in an ink jet nozzle, the solidified ink can be dissolved by the use of a solution containing the humectant.

In particular, the ink composition is preferably substantially free from a humectant with a vapor pressure of 2 mPa or less at 25°C. The phrase "substantially free from" as used herein means that the content of a humectant in the ink composition is less than 1% by weight.

When ink contains less than 3% by weight of the humectant with a vapor pressure of 2 mPa or less at 25°C, this ink can be used to print an image or the like on not only a recording media, such as a sheet of printing paper, having low ink absorbency but also a recording media, such as a sheet of synthetic paper or label paper, having particularly low ink absorbency by an ink jet printing method. When ink contains less than 1% by weight of the humectant with a vapor pressure of 2 mPa or less at 25°C, this ink can be used to print an image or the like on a metal or plastic having no ink absorbency by an ink jet printing method. It is apparent to those skilled in the art that some of the above penetrating solvents act as humectants. The penetrating solvents are herein excluded from the humectant. The above alcohol solvent is excluded from the humectant.

The humectant is one for use in general ink jet printing inks. Examples of the humectant include glycerin, ethylene glycol, diethylene glycol, triethylene glycol, propylene glycol, dipropylene glycol, tripropylene glycol, polypropylene glycol with a weight-average molecular weight of 400 to 1200, trimethylolpropane, trimethylol-methane, and trimethylolethane. When a recording medium used is a sheet of printing paper having low ink absorbency, the use of the humectant is effective in adjusting clogging elimination.

The ink composition may further contain an agent for preventing nozzle clogging, a preservative, an antioxidant, an electric conductivity modifier, a pH adjustor, a viscosity modifier, a surface tension modifier, and an oxygen absorbent.

Examples of the preservative and a fungicide include sodium benzoate, sodium pentachlorophenolate, sodium 2-pyridinethiol-1-oxide, sodium sorbate, sodium dehydroacetate, and 1,2-dibenzinethiazoline-3-one (Proxel CRL, Proxel BND, Proxel GXL, Proxel XL-2, and Proxel TN available from ICl).

Examples of the pH adjustor agent, the dissolution aid, or the antioxidant include amines such as diethanolamine, triethanolamine, propanolamine, and morpholine; modifications of the amines; inorganic salts such as potassium hydroxide, sodium hydroxide, and lithium hydroxide; ammonium hydroxide; quaternary ammonium hydroxide such as tetramethylammonium; carbonates such as potassium carbonate, sodium carbonate, and lithium carbonate; phosphates; N-methyl-2-pyrrolidone; ureas such as urea, thiourea, and tetramethylurea; allophanates such as allophanate and methyl allophanate; biurets such as biuret, dimethylbiuret, and tetramethylbiuret; L-ascorbic acid; and salts of L-ascorbic acid.

The ink composition may further contain an antioxidant and an ultraviolet absorber. Examples of the antioxidant and the ultraviolet absorber include Tinuvin 328, Tinuvin 900, Tinuvin 1130, Tinuvin 384, Tinuvin 292, Tinuvin 123, Tinuvin 144, Tinuvin 622, Tinuvin 770, Tinuvin 292, Irgacor 252, Irgacor 153, Irganox 1010, Irganox 1076, Irganox 1035, and Irganox MD 1024 available from Ciba Specialty Chemicals Inc. and also include lanthanide oxides.

The ink composition may further contain a sugar in addition to the water-soluble symmetrical end-capped alkanediol. The use of the sugar in combination with the water-soluble symmetrical end-capped alkanediol, the gemini surfactant, and the alcohol solvent is effective in preventing the occurrence of clogging and/or curling and allows prints to have increased gloss. An increase in gloss is probably due to the fact that the use of the sugar allows a coating to be formed on a print.

Preferred examples of the sugar include monosaccharides, disaccharides, oligosaccharides including trisaccharides and tetrasaccharides, polysaccharides, and derivatives of these saccharides. Particularly preferred examples of the sugar include glucose, mannose, fructose, ribose, xylose, arabinose, galactose, glucitol, sorbit, maltose, cellobiose, lactose, sucrose, trehalose, maltotriose, and furanose. The term "polysaccharide" as used herein refers to a sugar in a broad sense and covers substances, such as α-cyclodextrin and cellulose, widely distributed in nature. Examples of the saccharide derivatives include reducing sugars such as sugar alcohols represented by the formula HOCH₂(CHOH)ₙCH₂OH, wherein n is an integer of 2 to 5; oxidized sugars such as aldonic acids and uronic acids; amino acids; and thiosugars, these sugars and acids being derived from the above saccharides. The sugar alcohols are particularly preferred. Examples of the sugar alcohols include maltitol, sorbitol and xylitol. The sugar may be a commercially available product, of which preferred examples include HS-20, HS-30, and HS-500 available from Hayashibara Shoji, Inc. and also include OligoGGF available from Asahi Kasei Corporation.

The ink composition can be produced in such a manner that the above-mentioned components are dispersed and mixed by an appropriate method. In particular, the ink composition can be produced as described below. A homogeneous pigment dispersion is preferably prepared in such a manner that a pigment, a polymer dispersant, and water are mixed together in an appropriate dispersing apparatus such as a ball mill, a sand mill, an attritor, a roll mill, an agitator mill, a Henschel mixer, a colloid mill, an ultrasonic homogenizer, a jet mill, or an angmill. A resin (resin emulsion) prepared in advance, water, a water-soluble organic solvent, a sugar, a pH adjustor, a preservative, and a fungicide are sufficiently dissolved in the pigment dispersion, whereby an ink solution is prepared. After being sufficiently stirred, the ink solution is filtered such that coarse particle and inclusions causing clogging are removed from the ink solution, whereby the ink composition is obtained.

An ink jet recording method according to an embodiment of the present invention includes ejecting droplets of the ink composition and applying the droplets to a recording medium to perform printing. In the ink jet recording method, the recording medium is preferably a sheet of synthetic paper or printing paper. According to the ink jet recording method, a high-quality image free from white streaks or roughness can be printed even on a sheet of art paper, a sheet of high-quality paper for print-on-demand (POD) applications, or a sheet of special paper for laser printers at low resolution. In particular, even a sheet of printing paper with an area weight of 73.3 to 104.7 g/m² or an area weight of 104.7 to 209.2 g/m² can be used to print a high-quality image free from white streaks or roughness at low resolution. Examples of the high-quality paper for POD applications include Ricoh business coat gloss 100 available from Ricoh Company, Ltd. Examples of the special paper for laser printers include LPCCTA4 available from Seiko Epson Corporation.

### Examples

The present invention is further described below in detail with reference to examples. The present invention is not limited to the examples.

Components were mixed together in accordance with each composition shown in Table 1. The mixture was filtered through a 10-µm membrane filter, whereby an ink composition was prepared. In Table 1, a styrene-acrylic acid resin is a copolymer having a molecular weight of 1,600 and an acid value of 150; a urethane resin is a copolymer having a molecular weight of 6,000 and an acid value of 50; a fluorene resin contains about 50% by weight of moieties derived from a monomer, represented by CAS No. 117344-32-8, having a fluorene backbone and has a molecular weight of 3,300; and a surfactant is a gemini surfactant, Pellicer L-30, available from Asahi Kasei Chemicals Corporation.

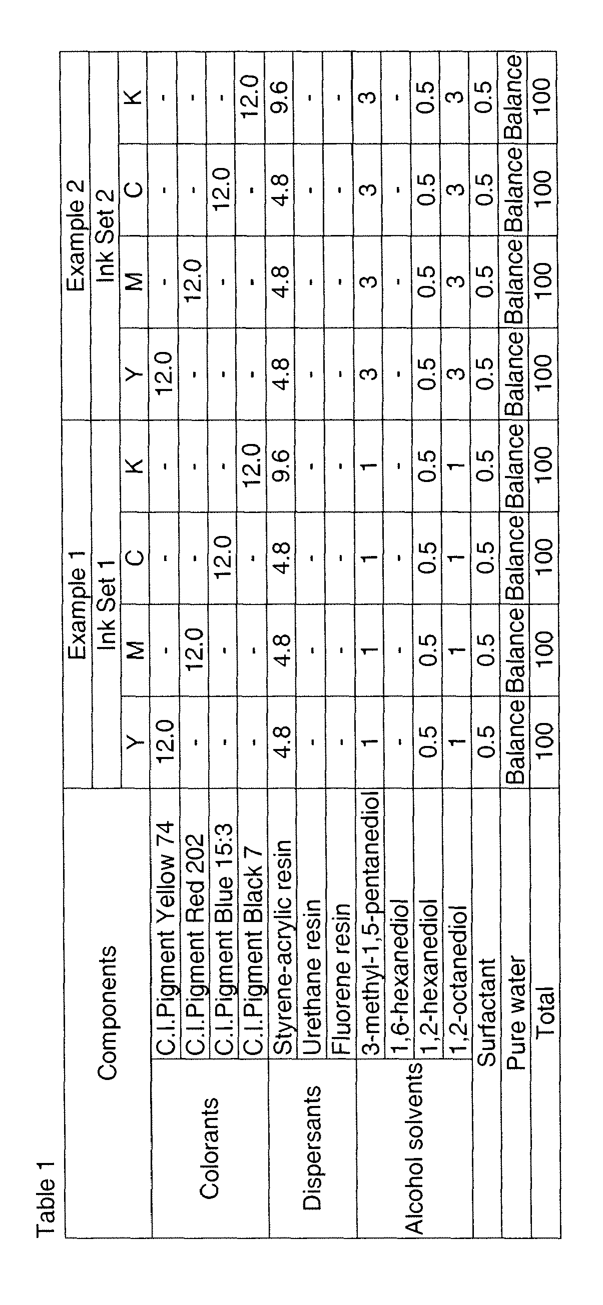

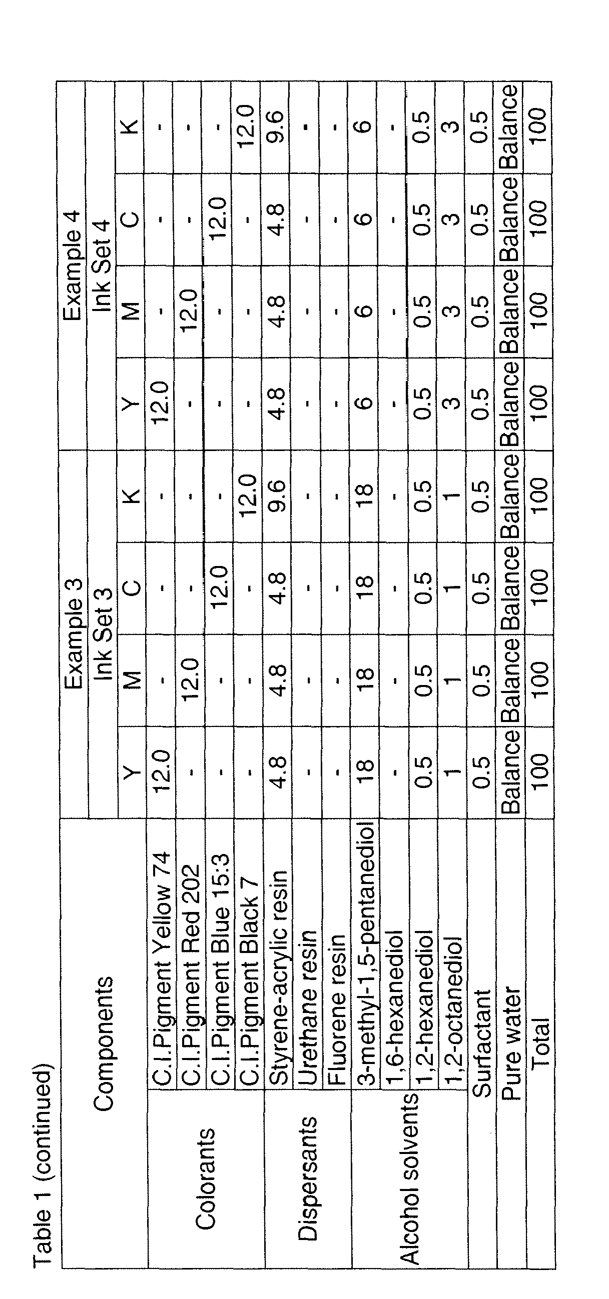

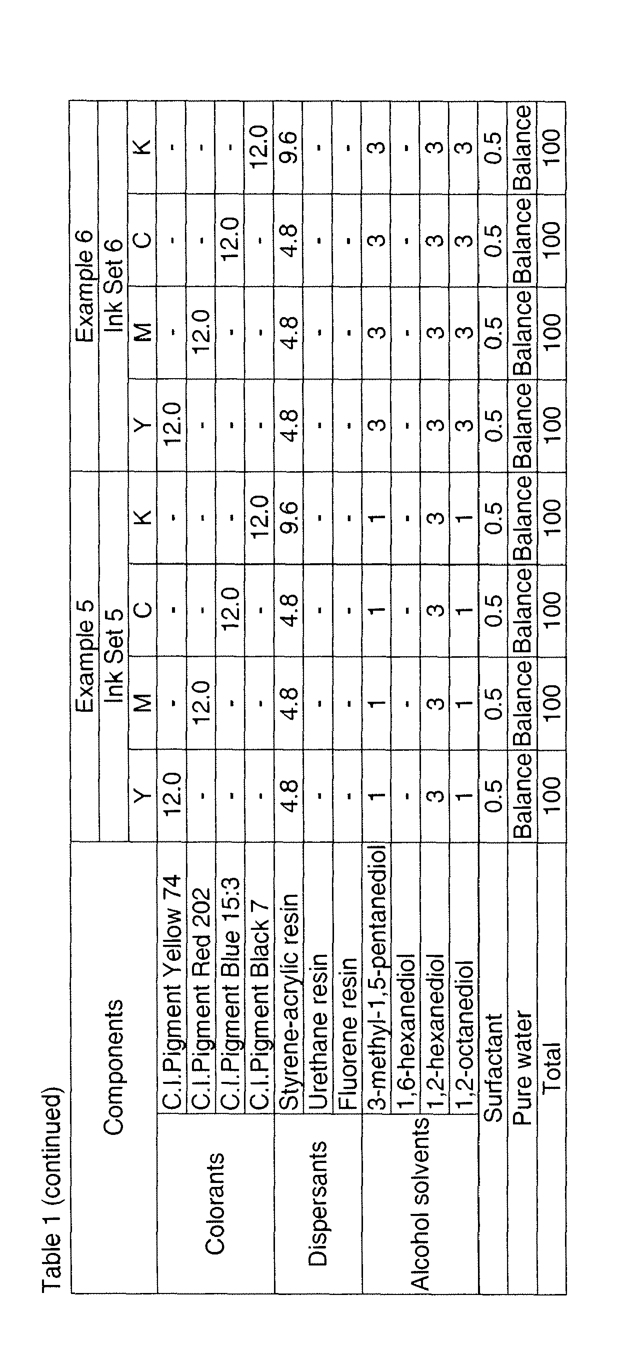

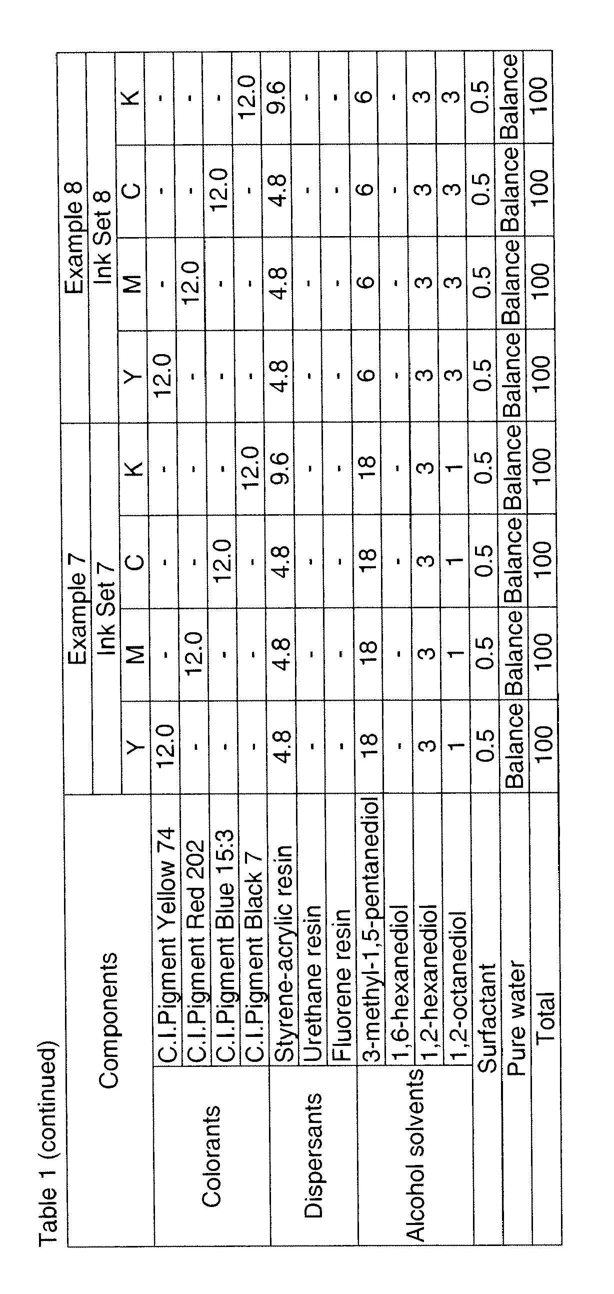

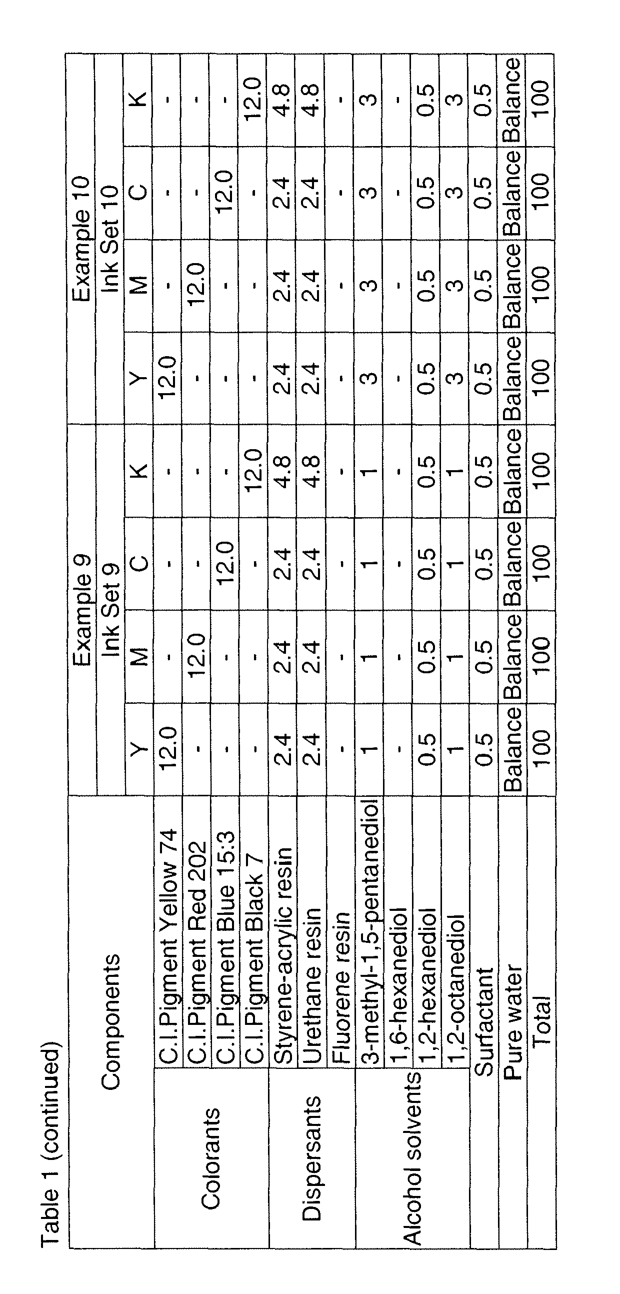

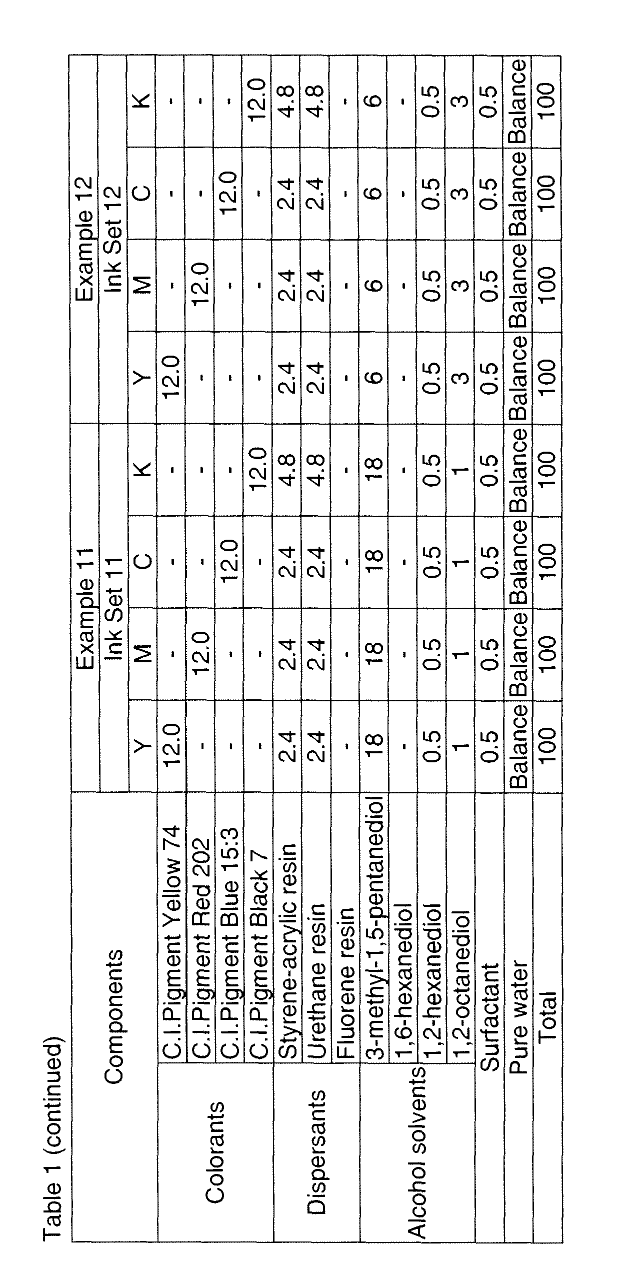

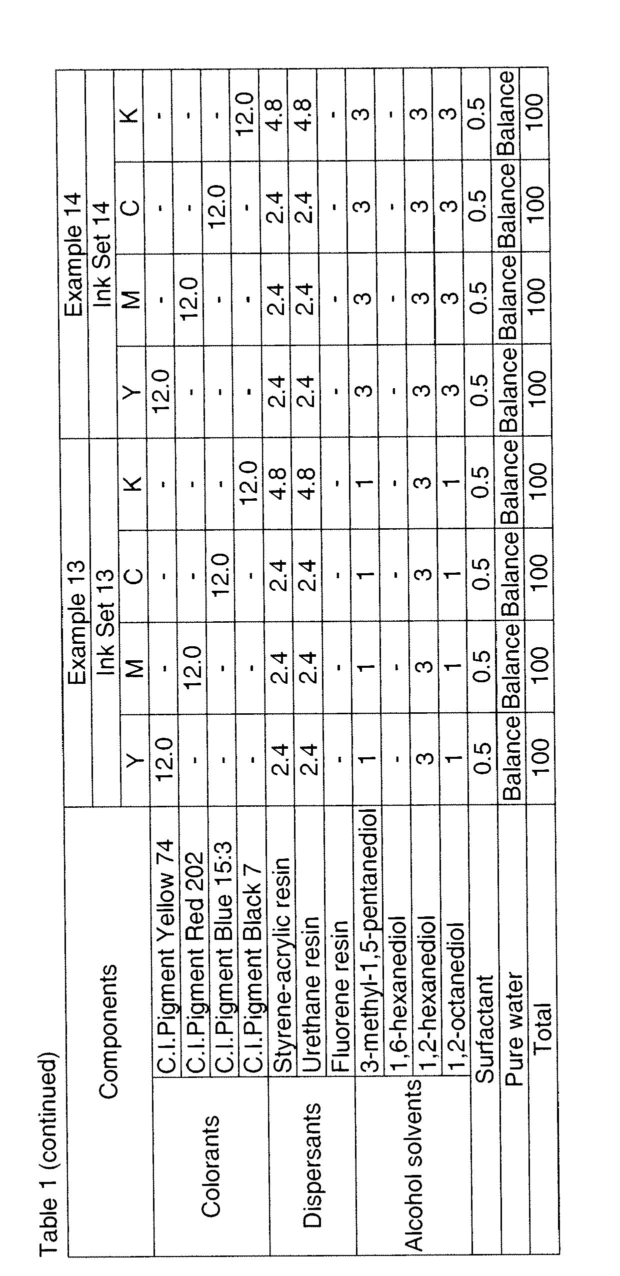

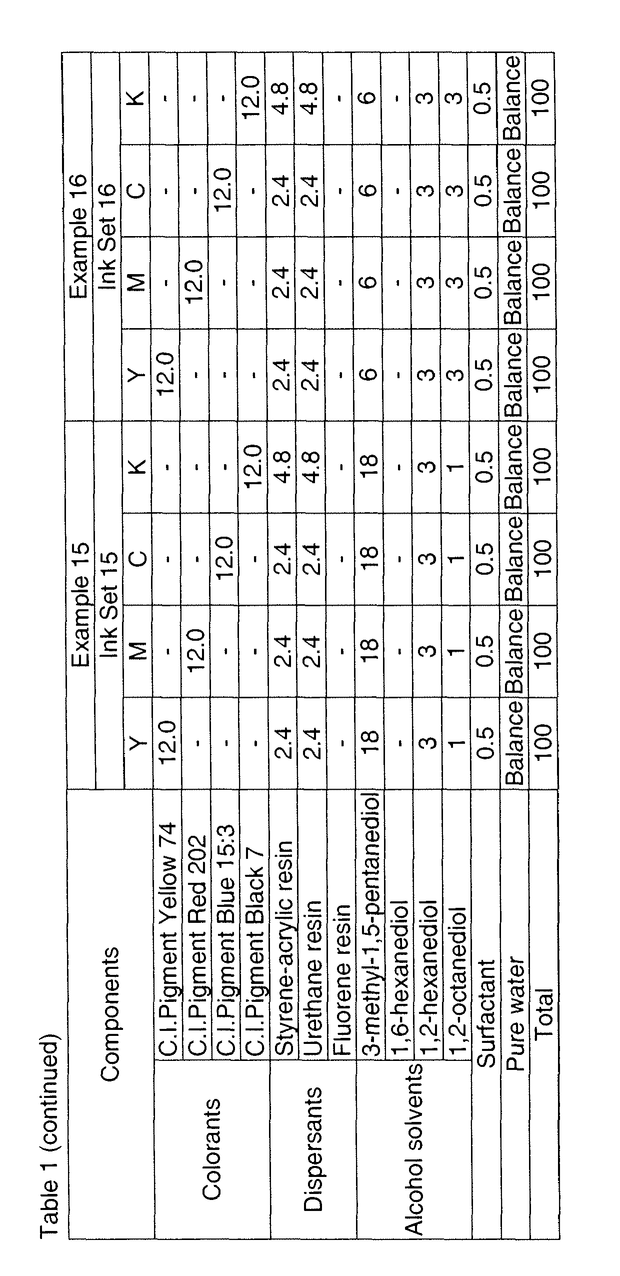

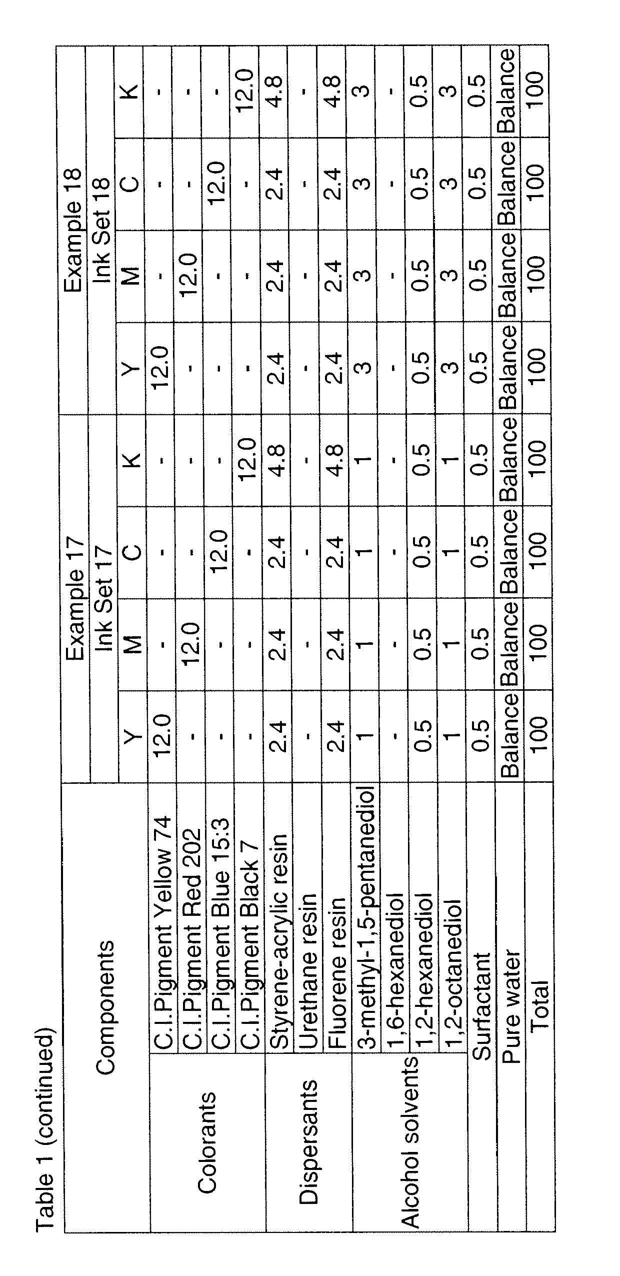

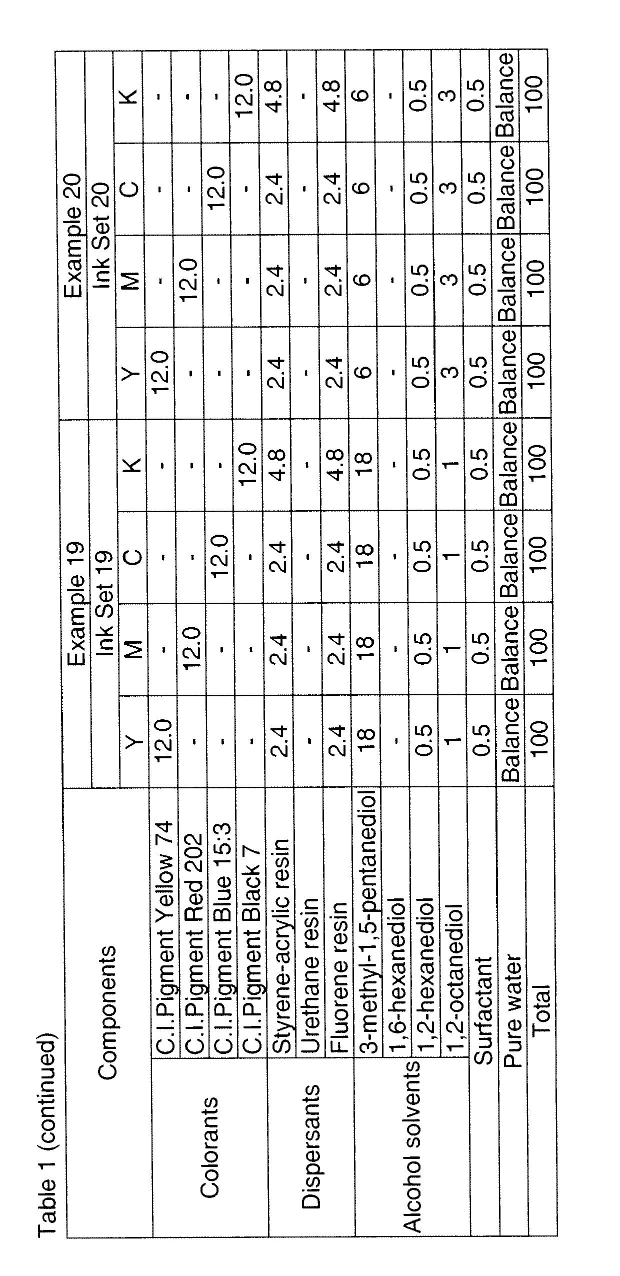

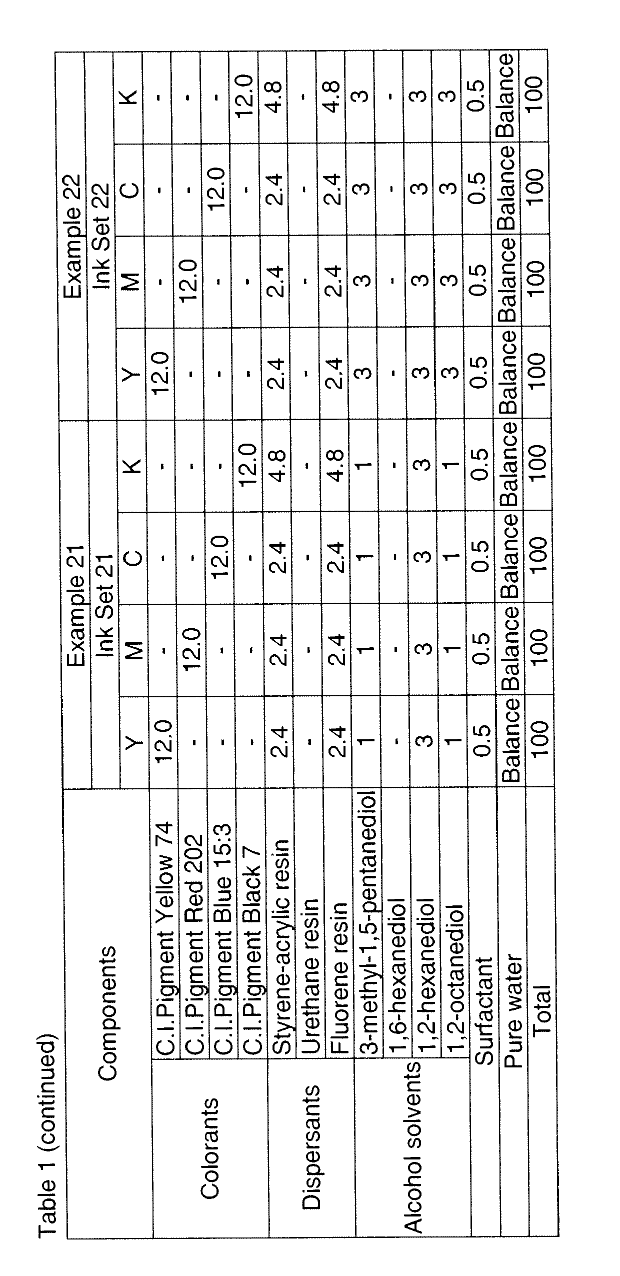

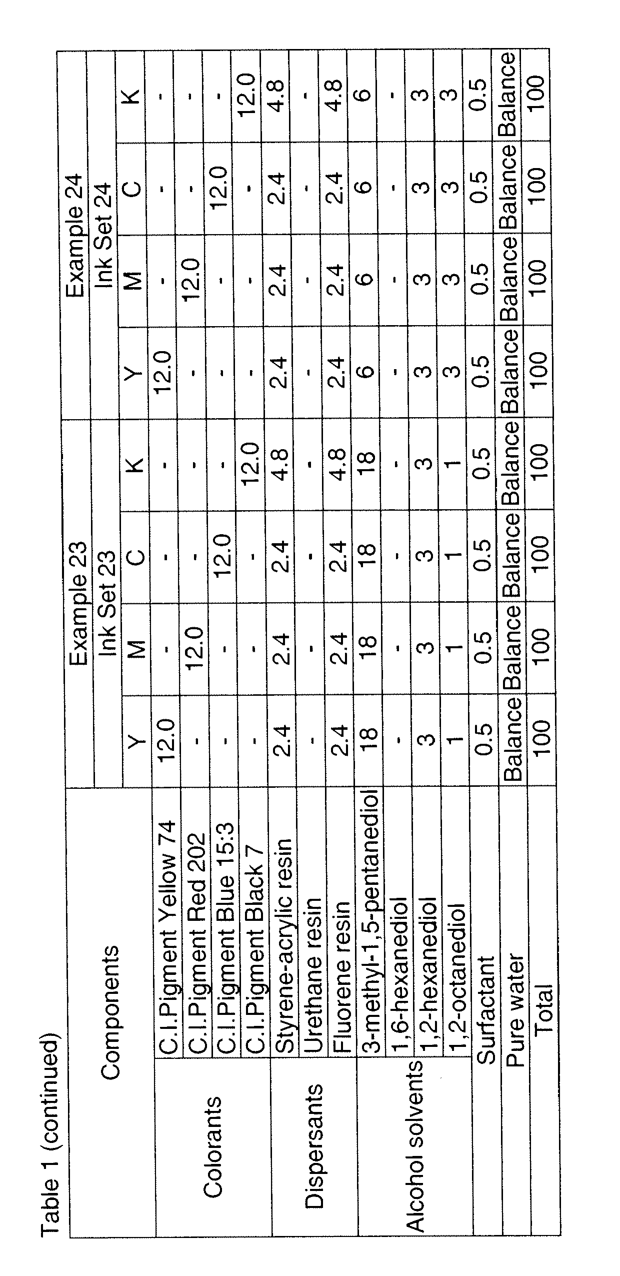

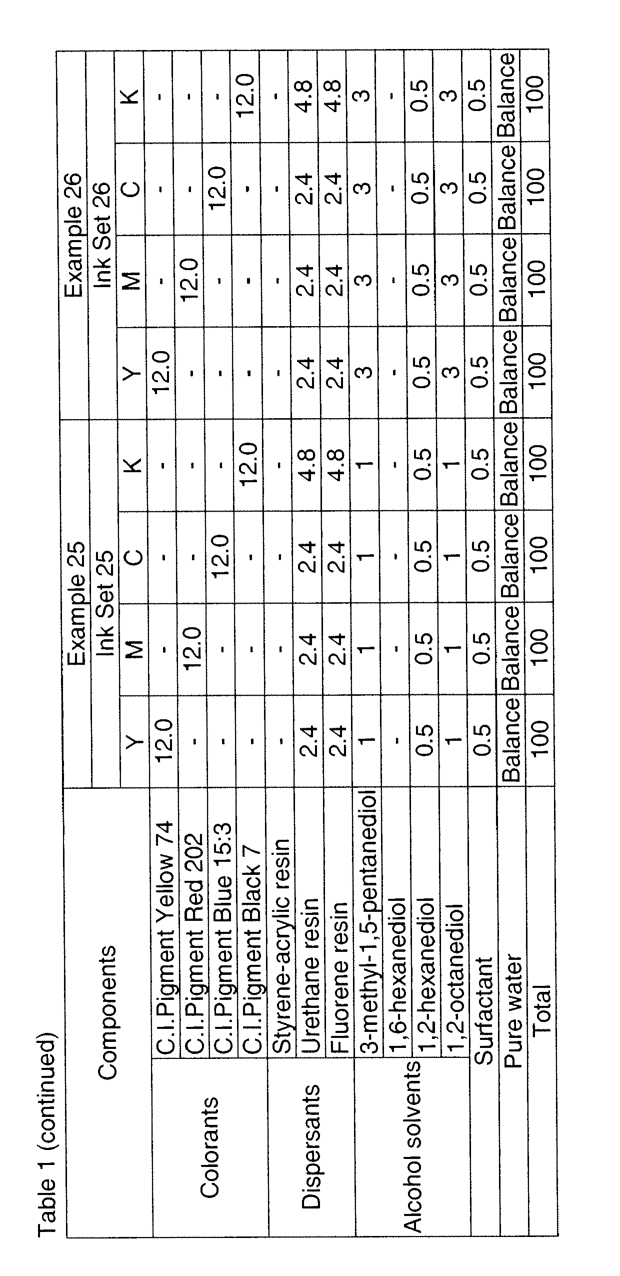

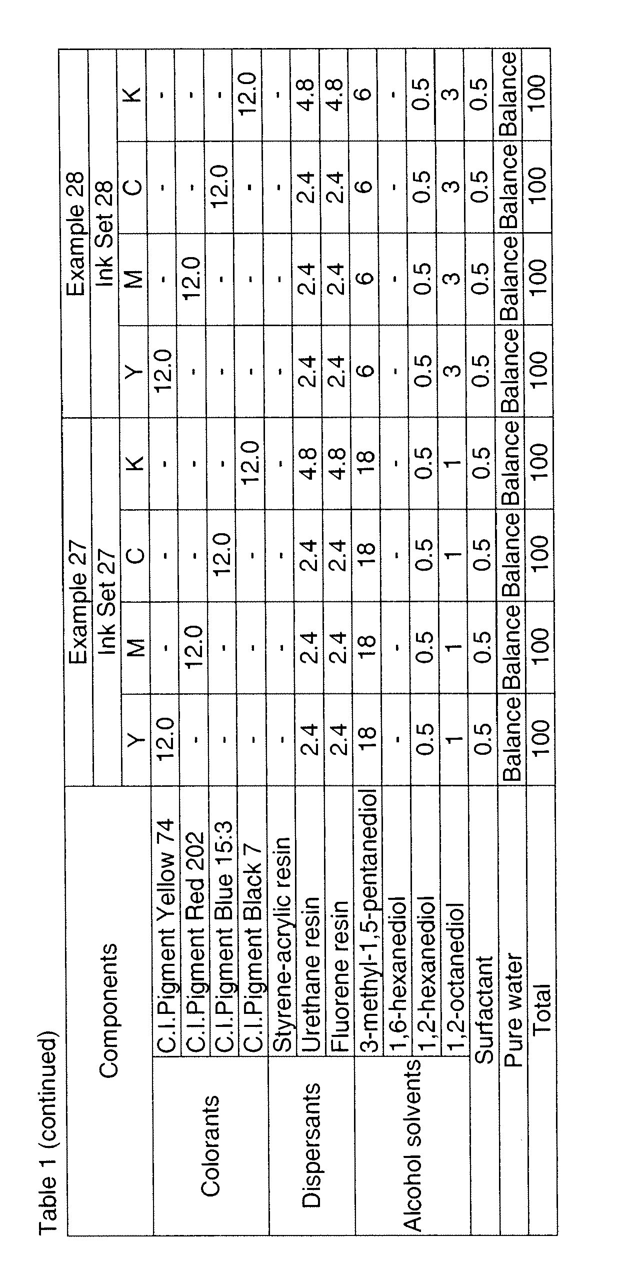

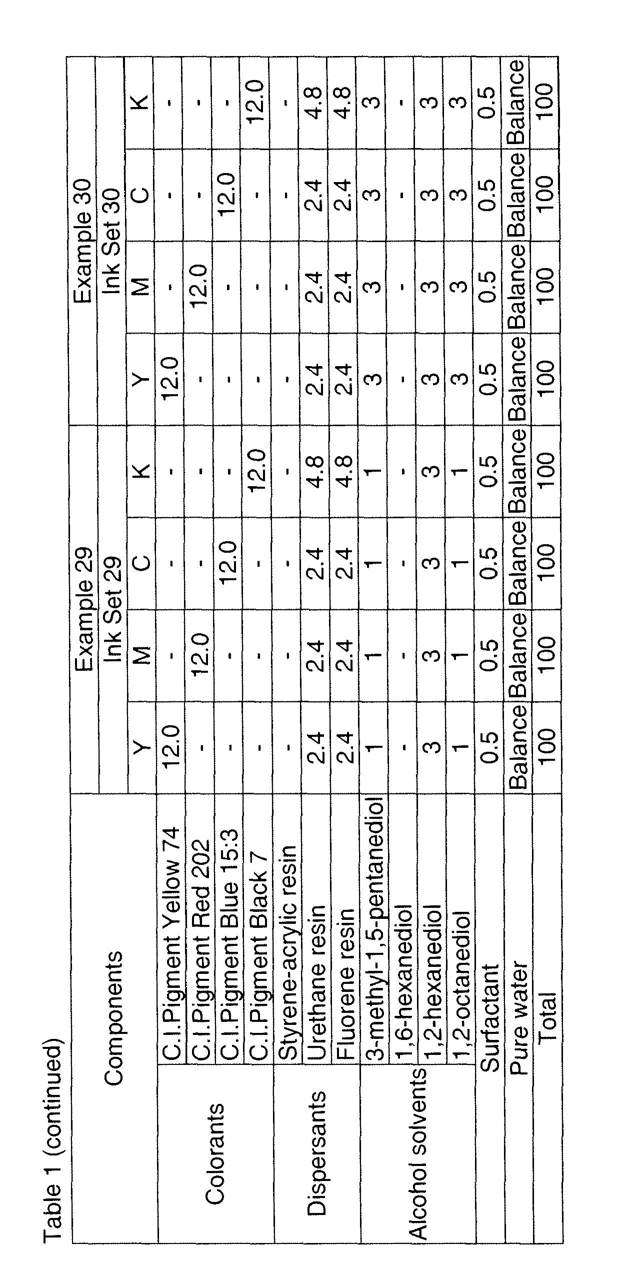

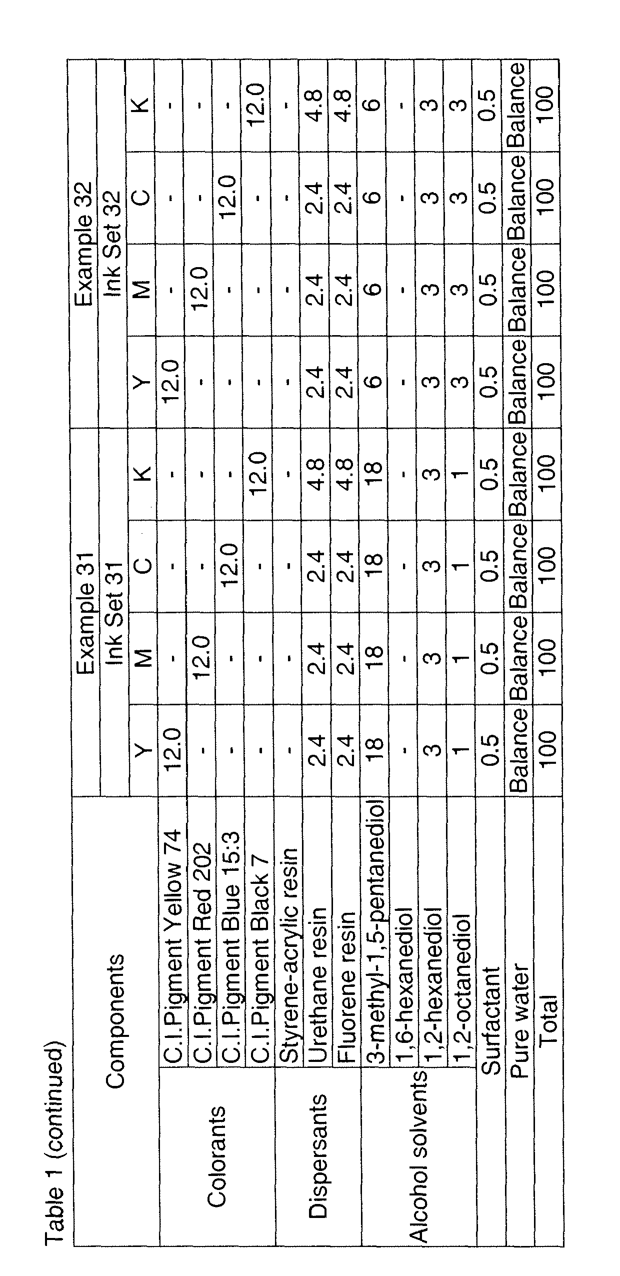

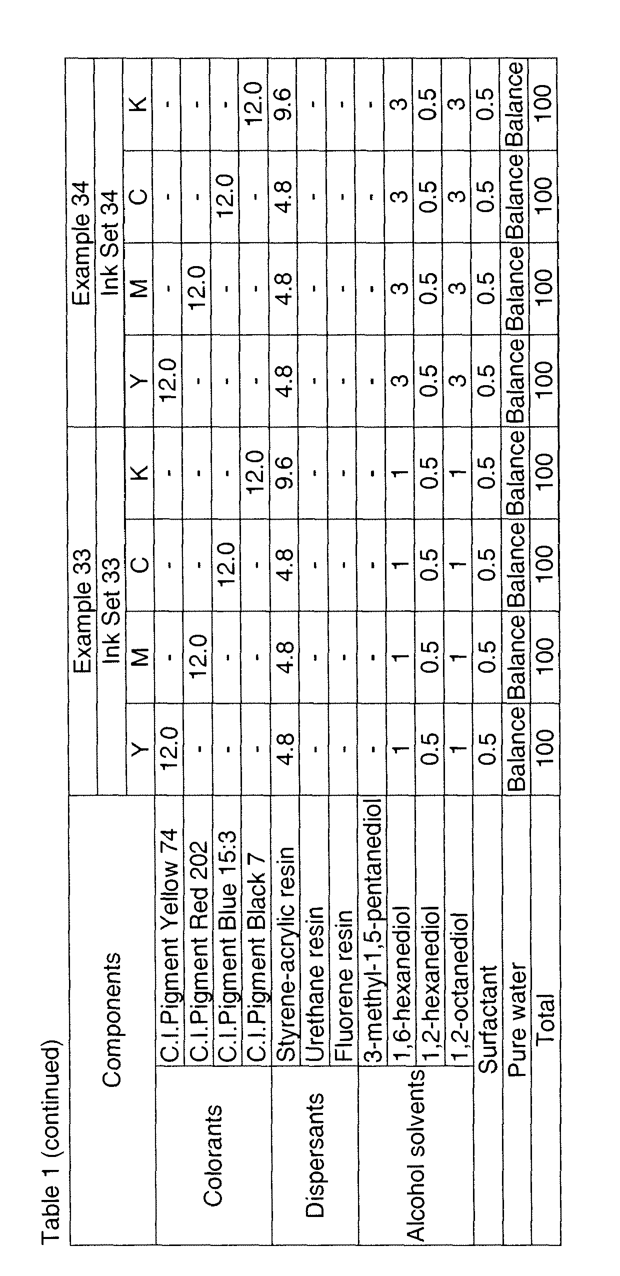

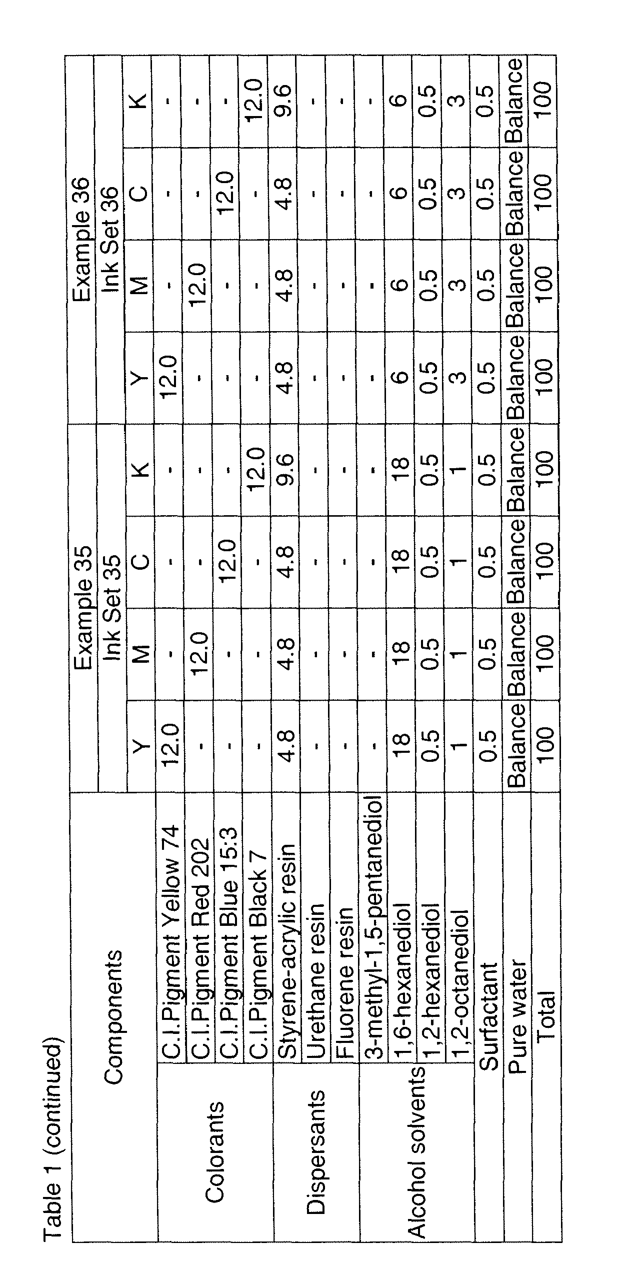

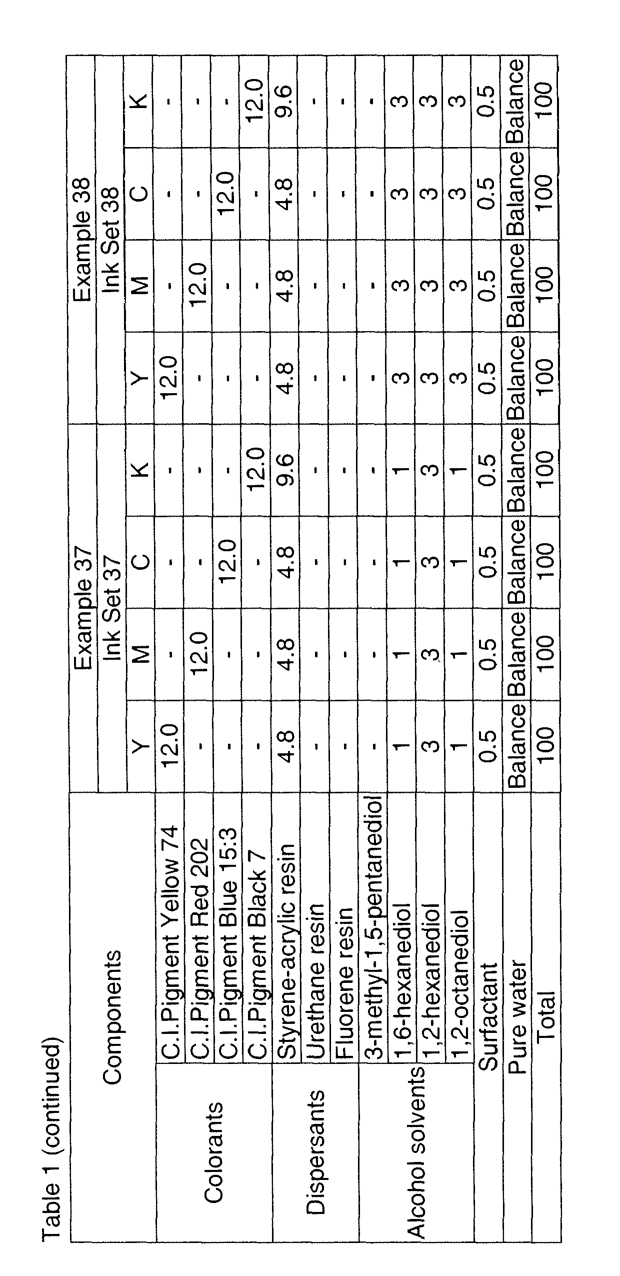

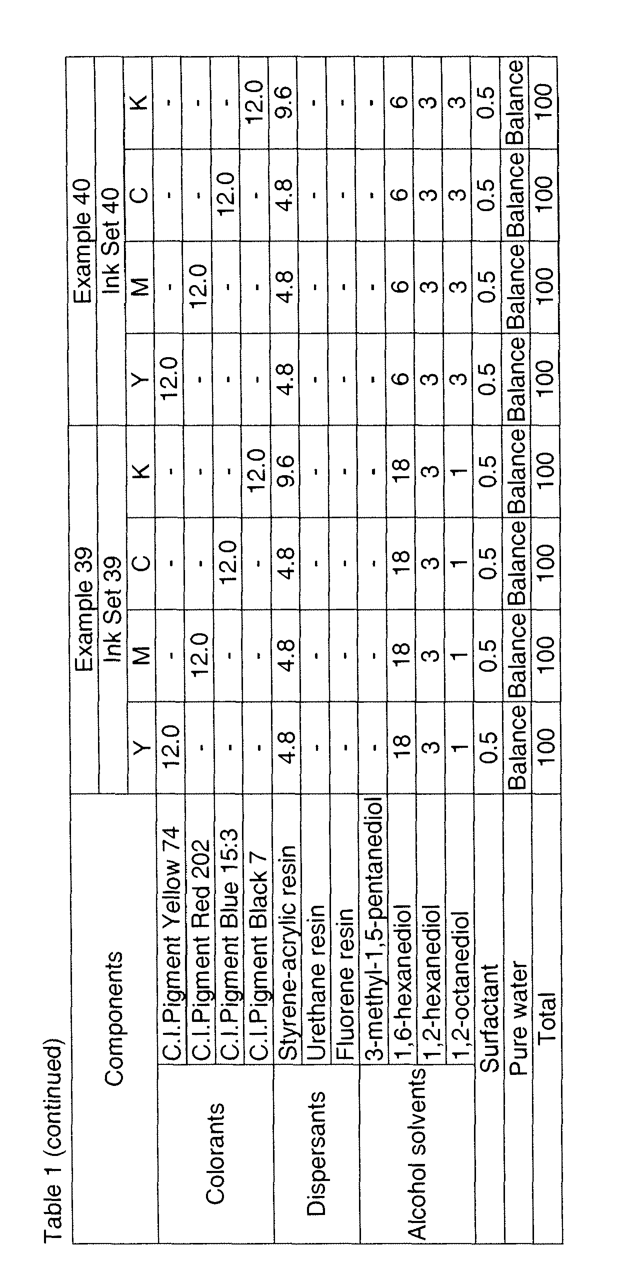

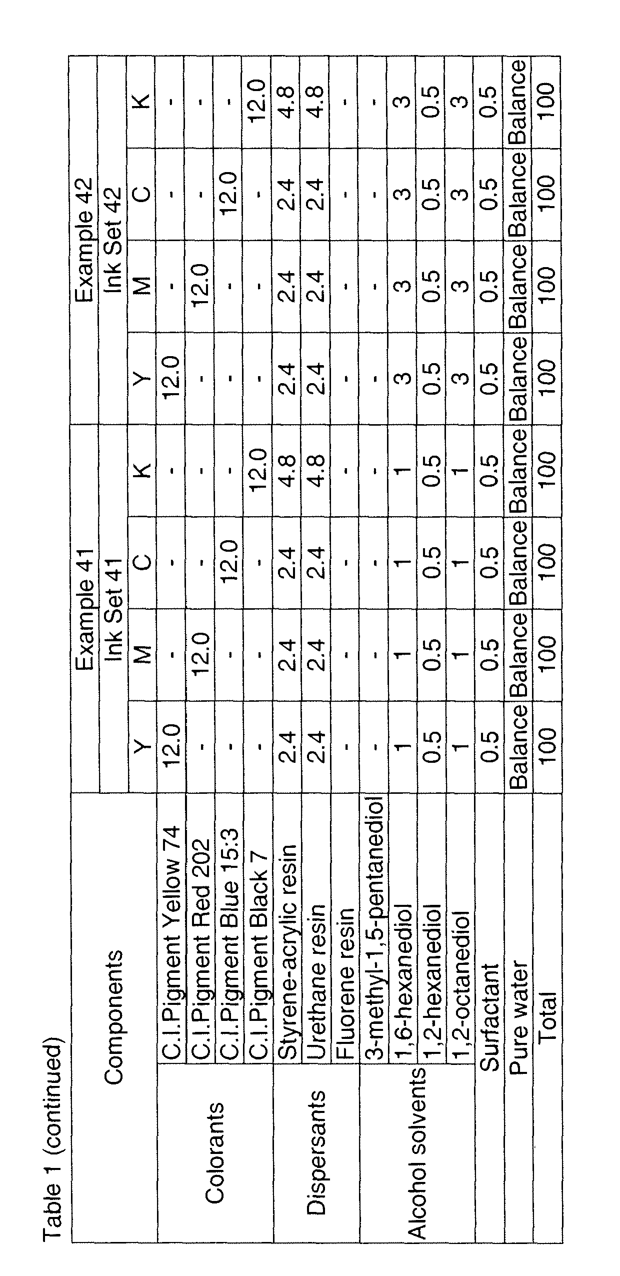

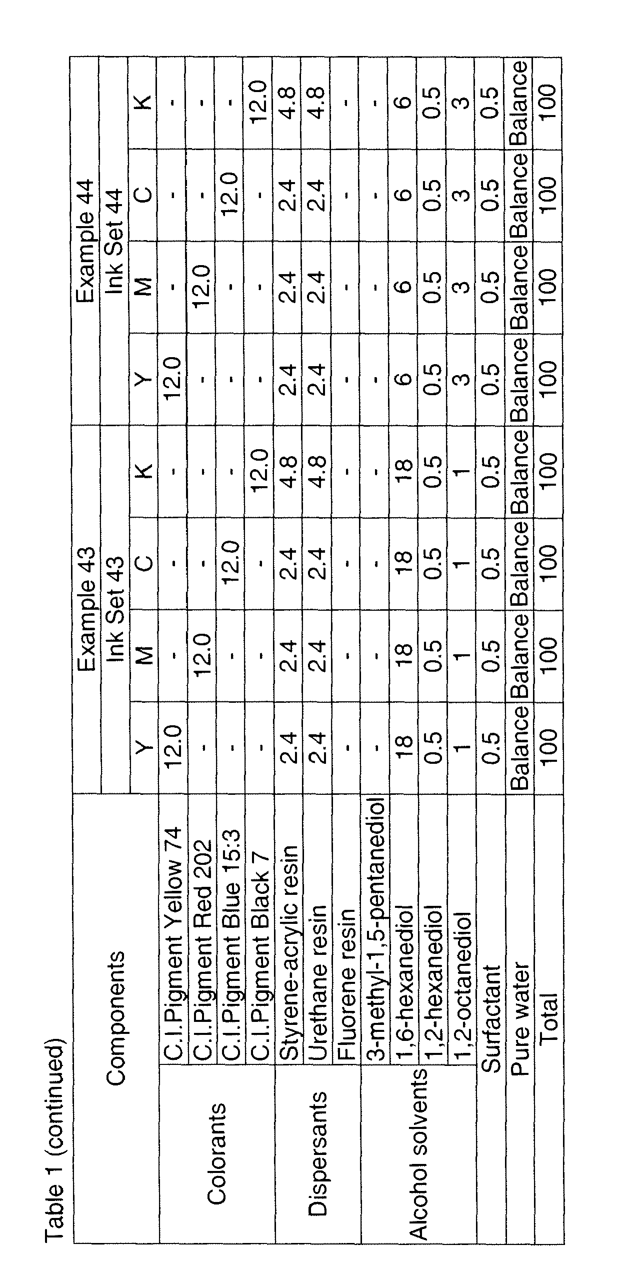

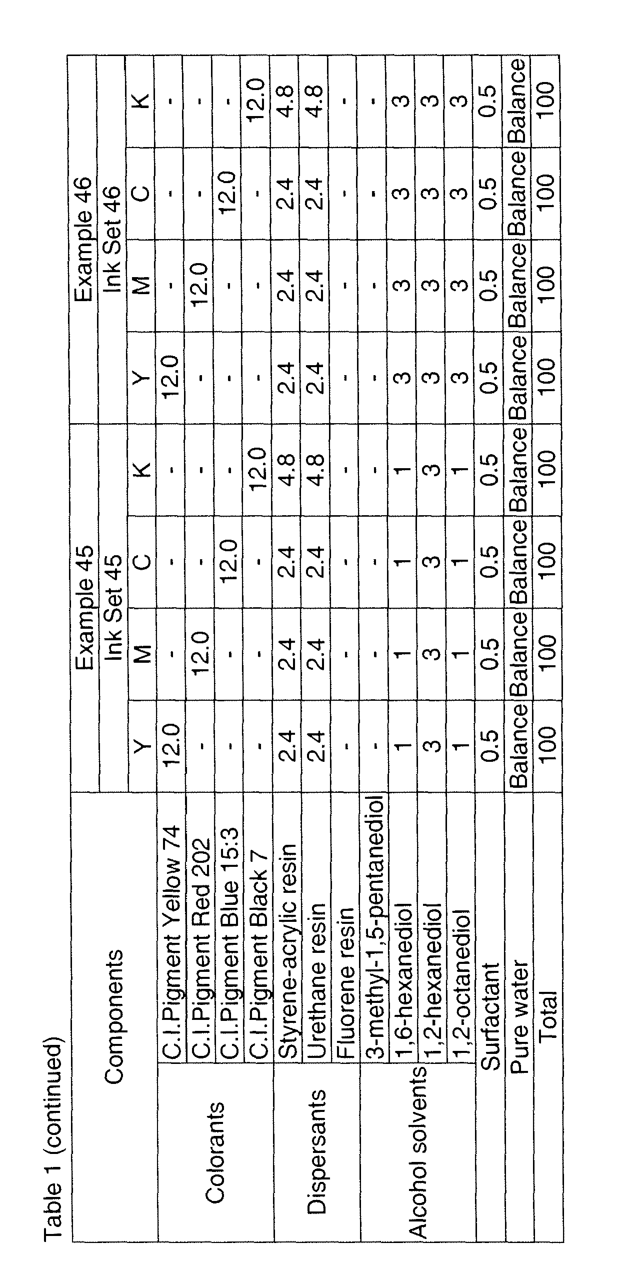

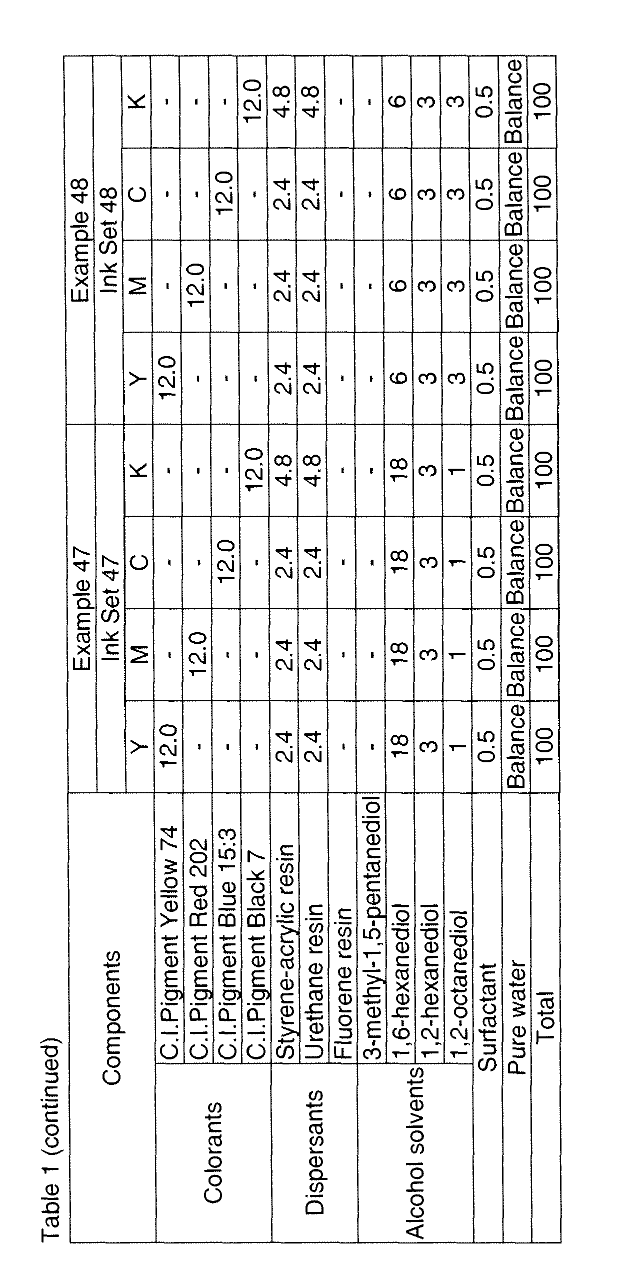

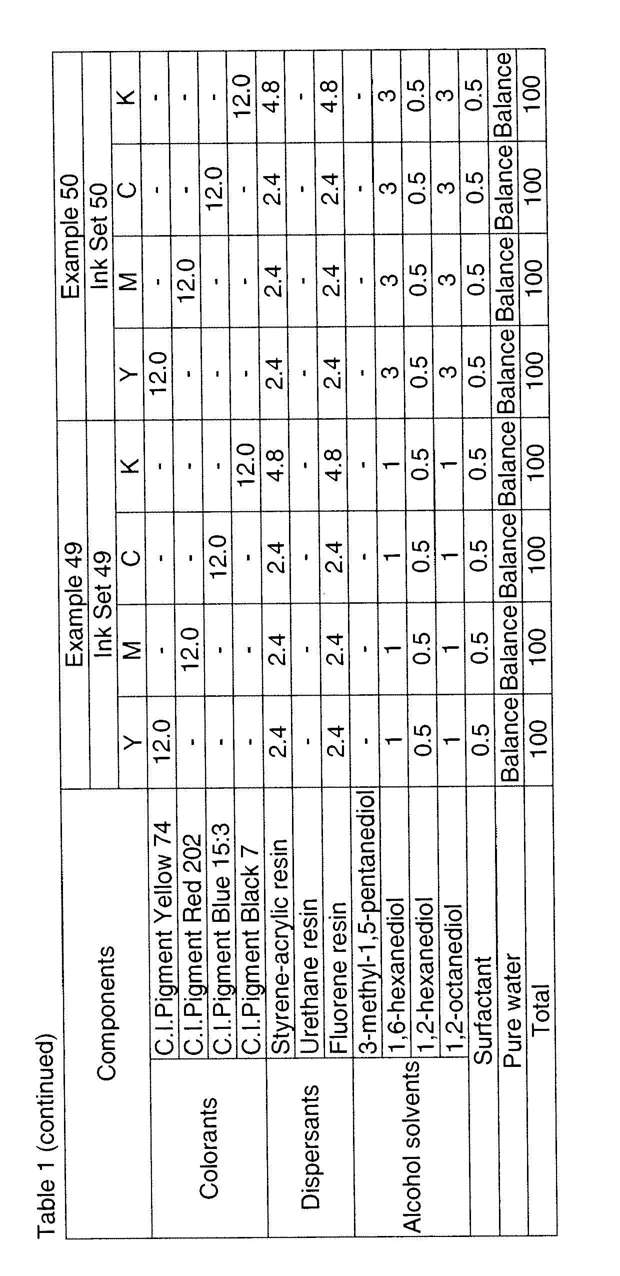

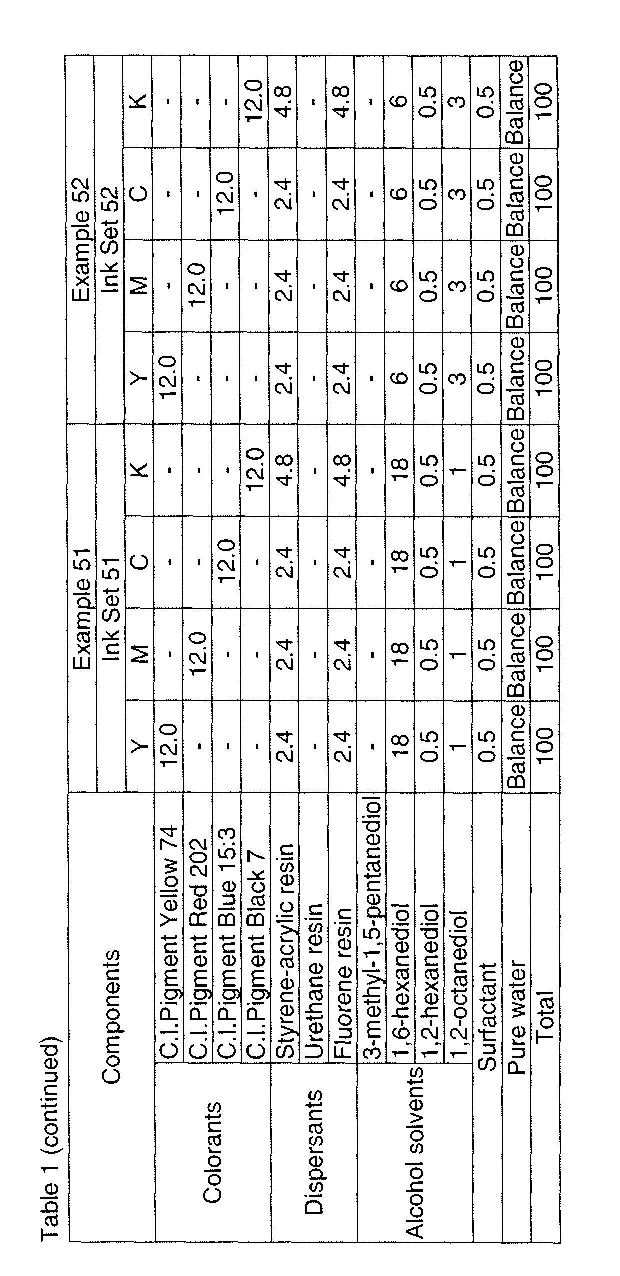

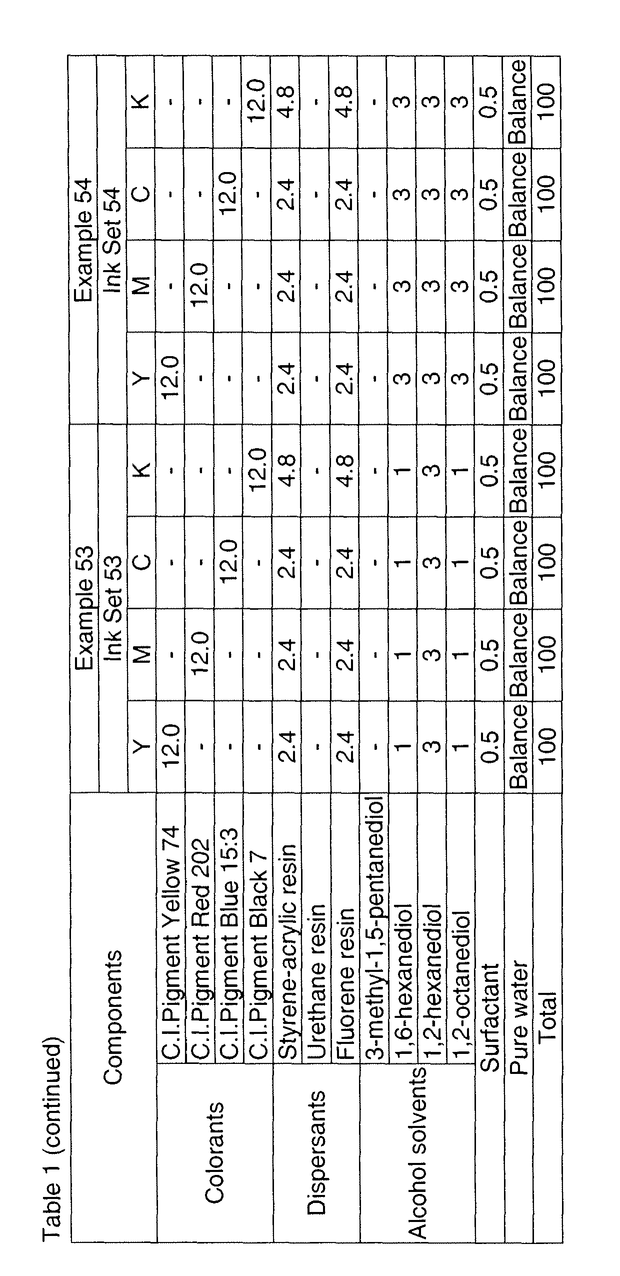

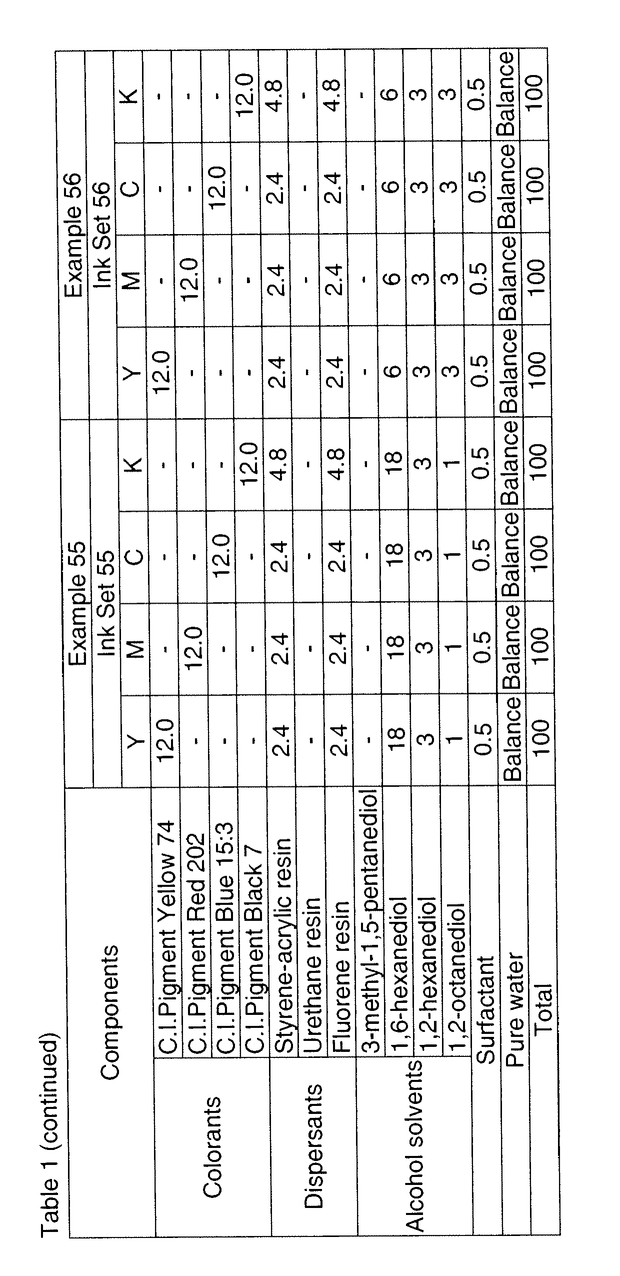

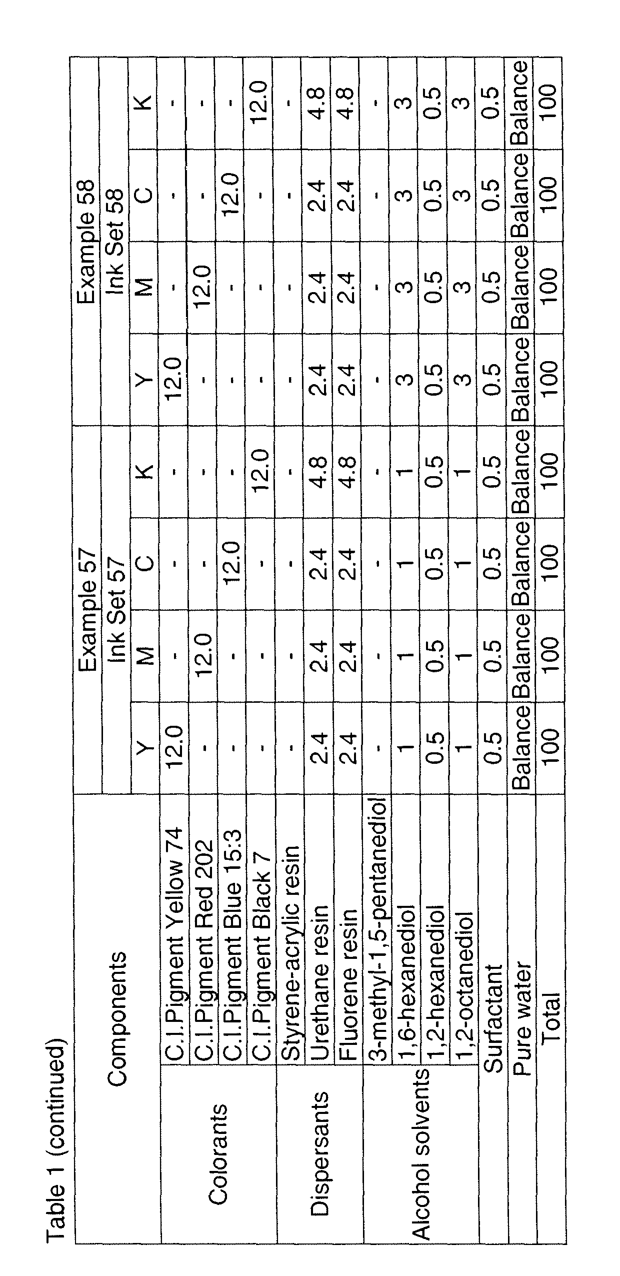

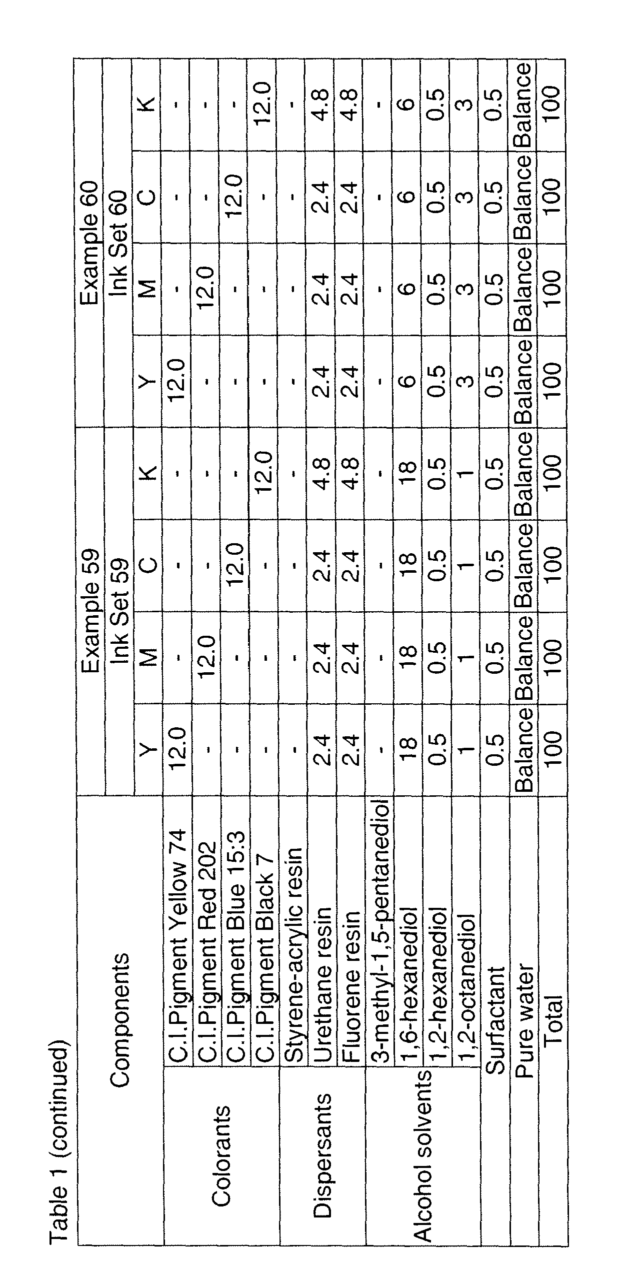

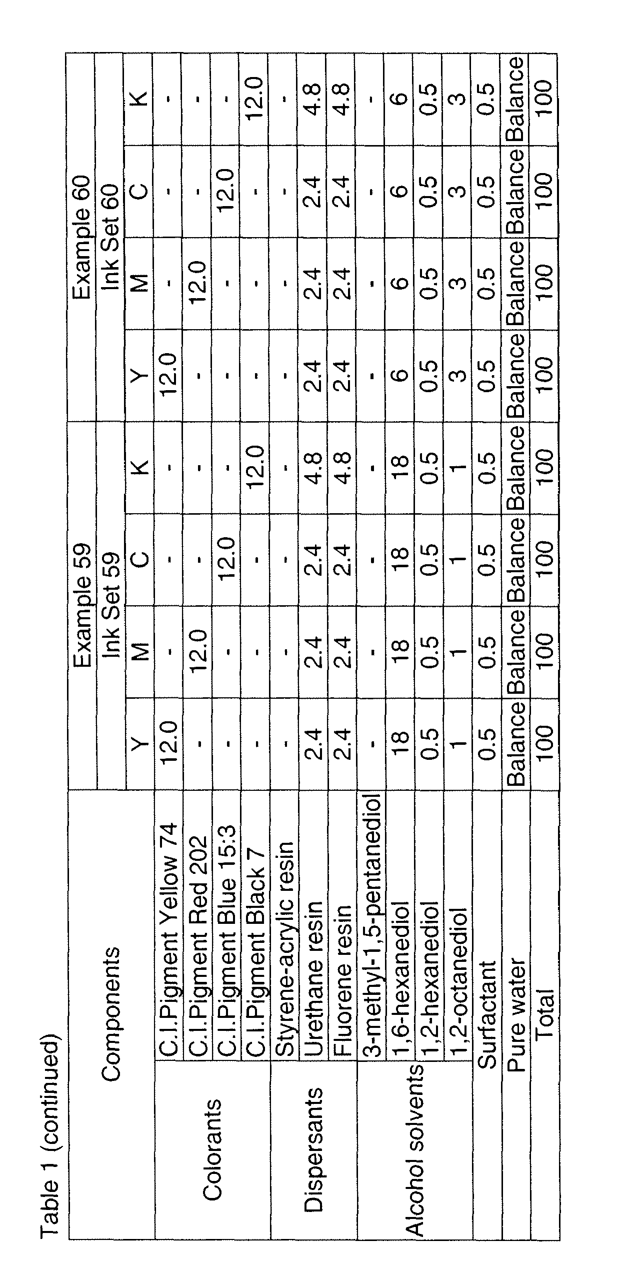

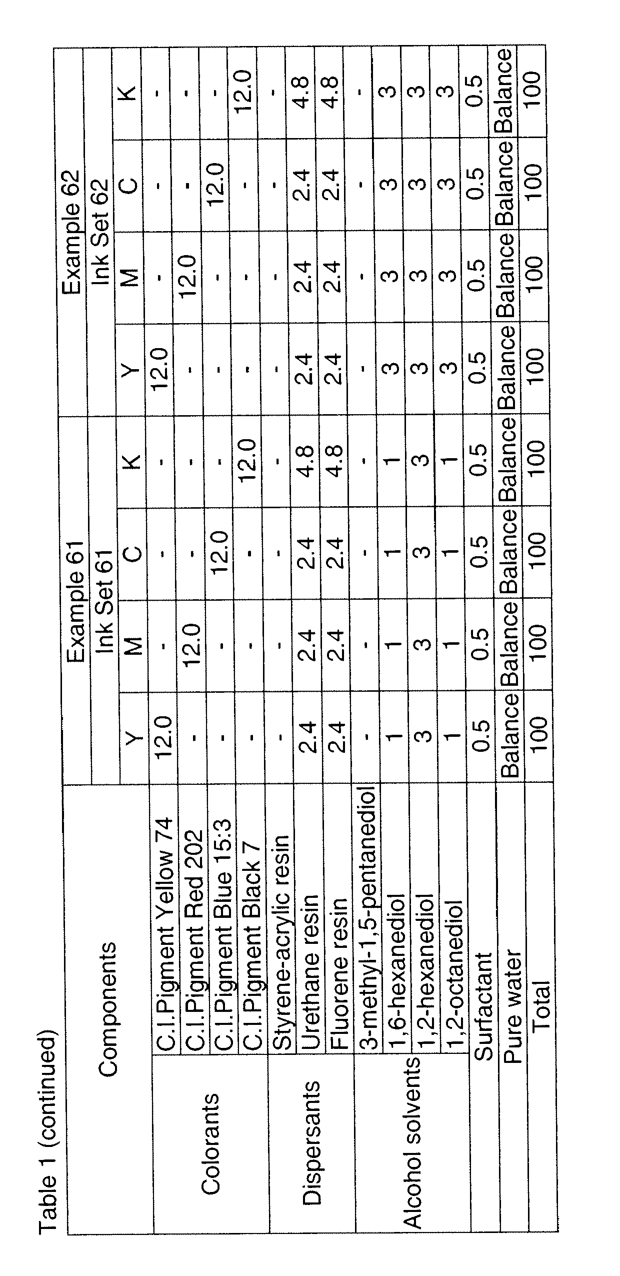

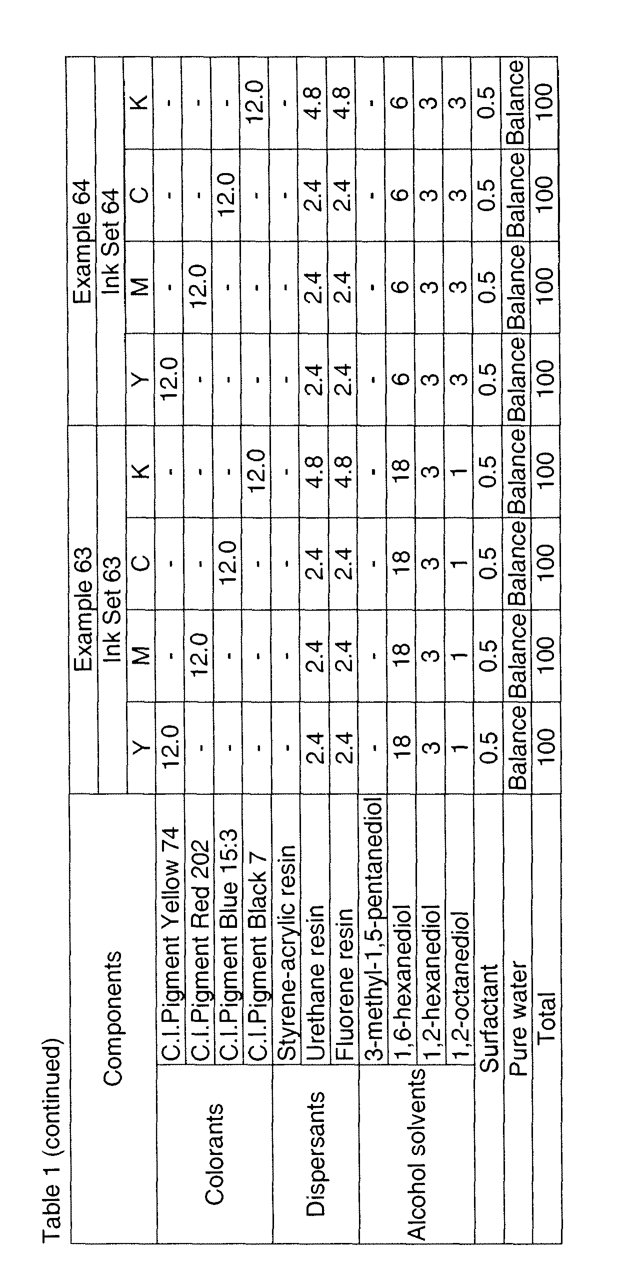

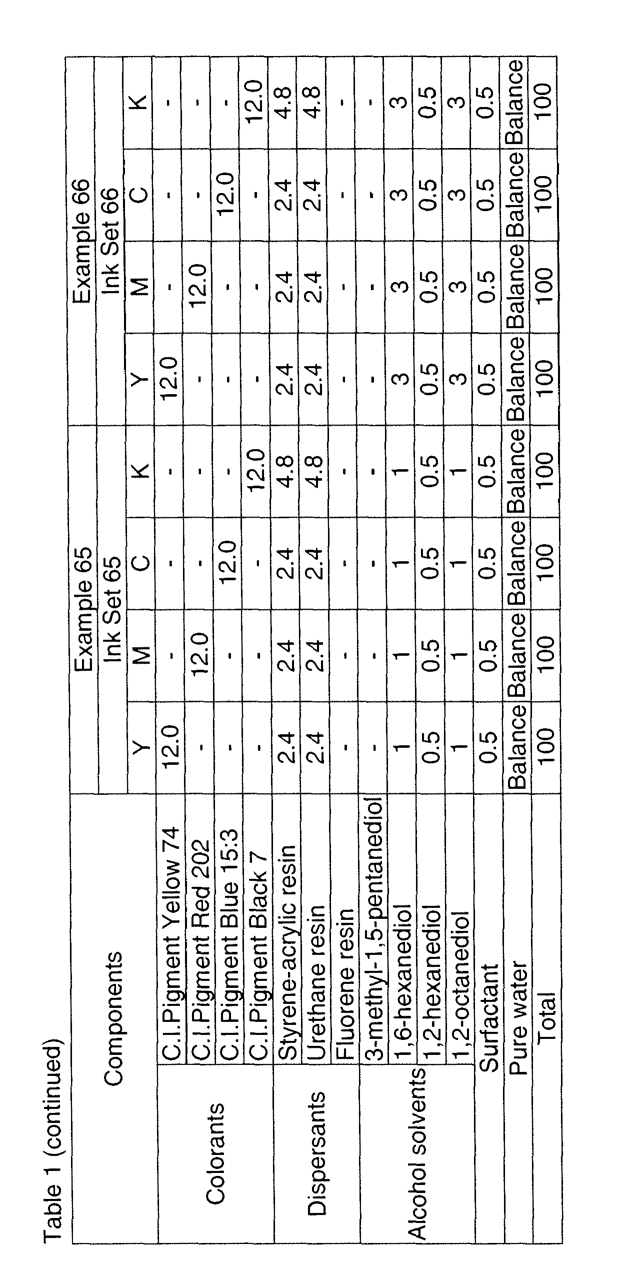

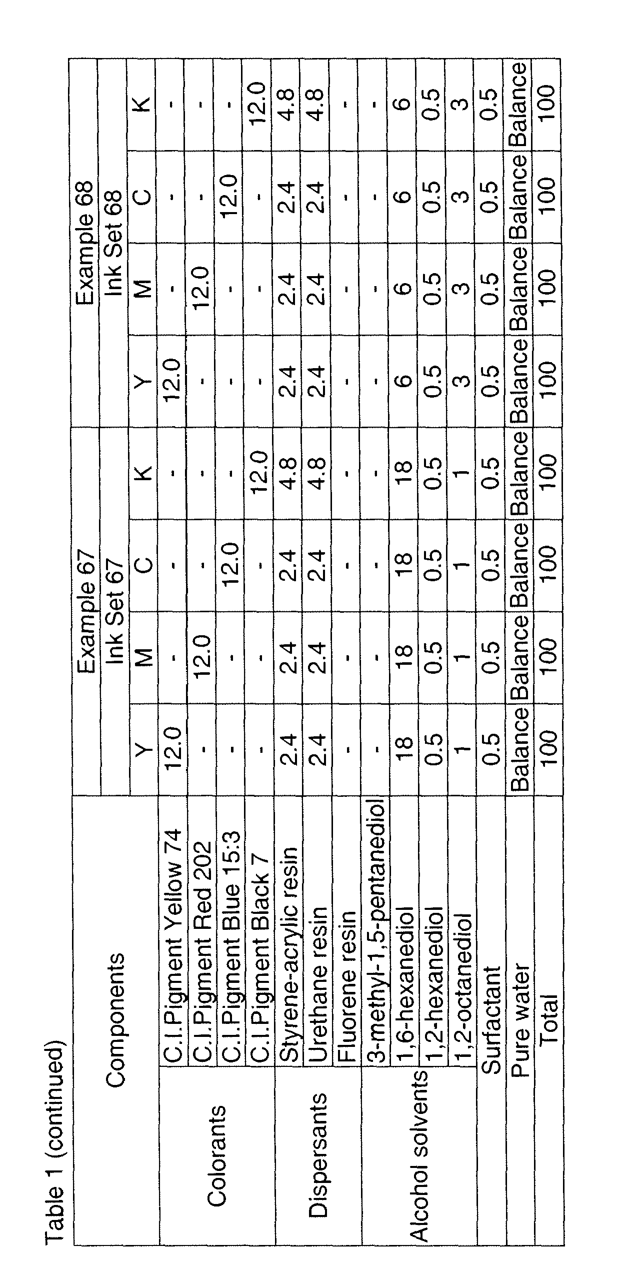

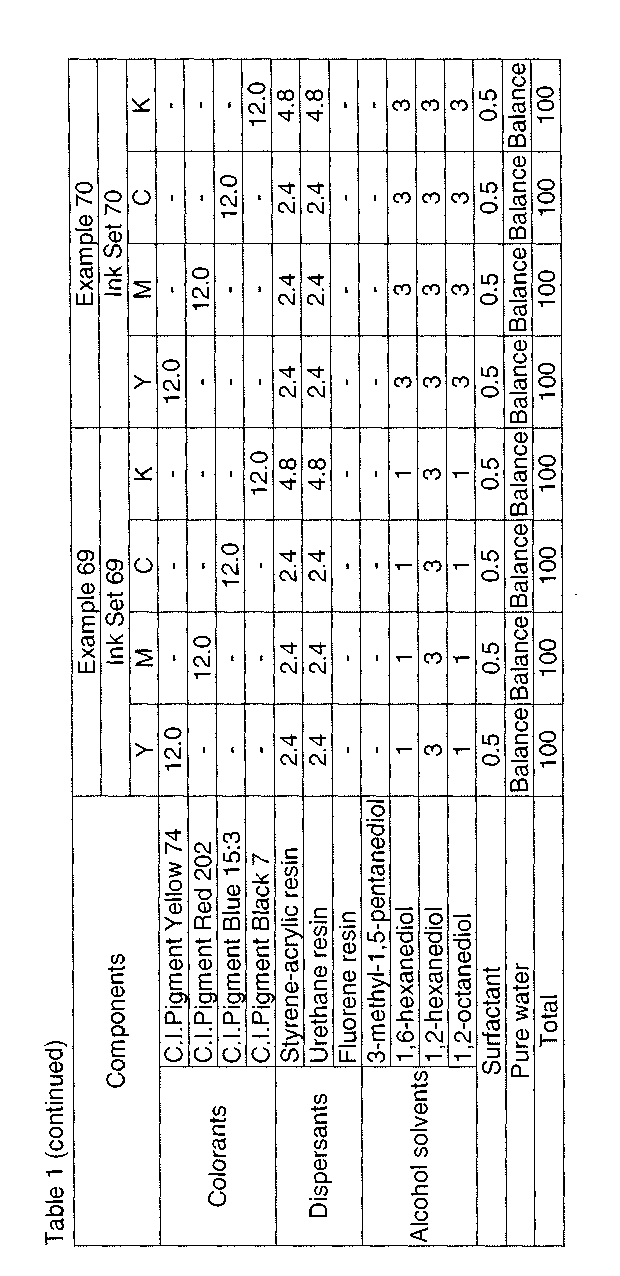

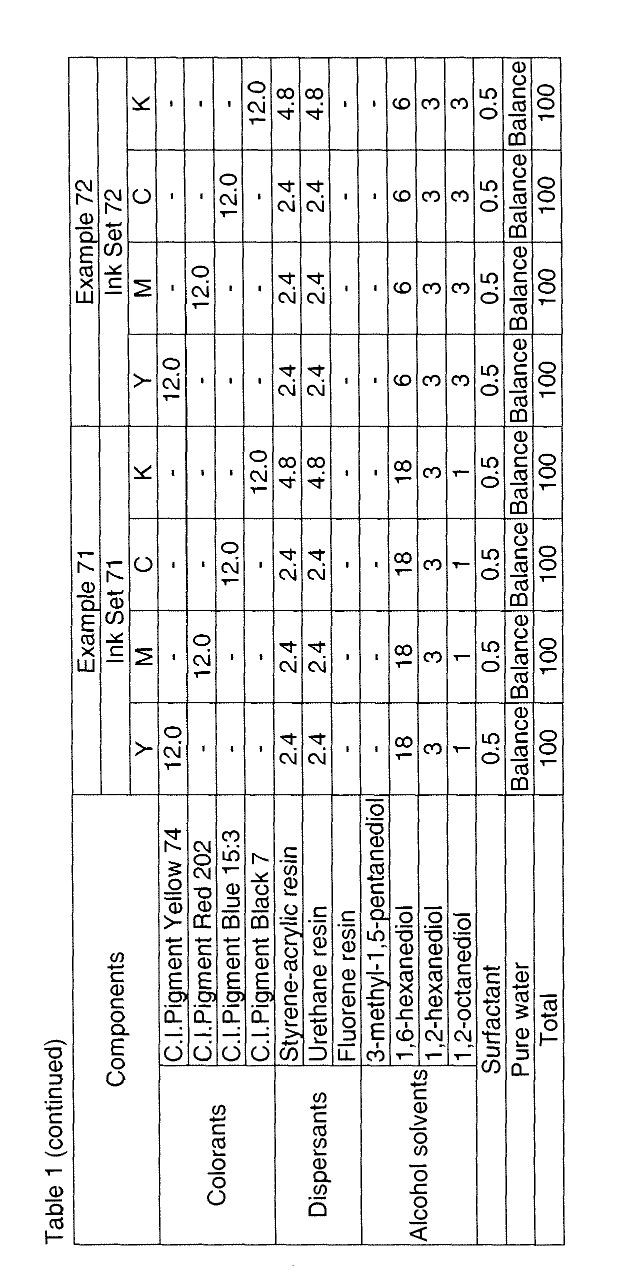

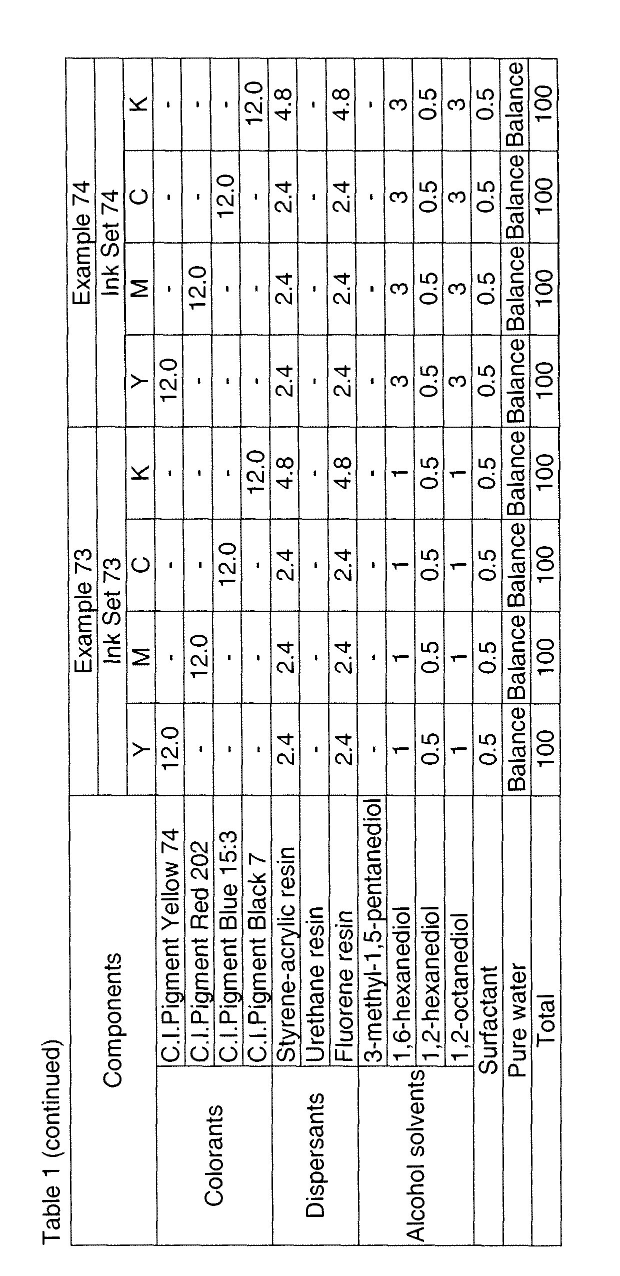

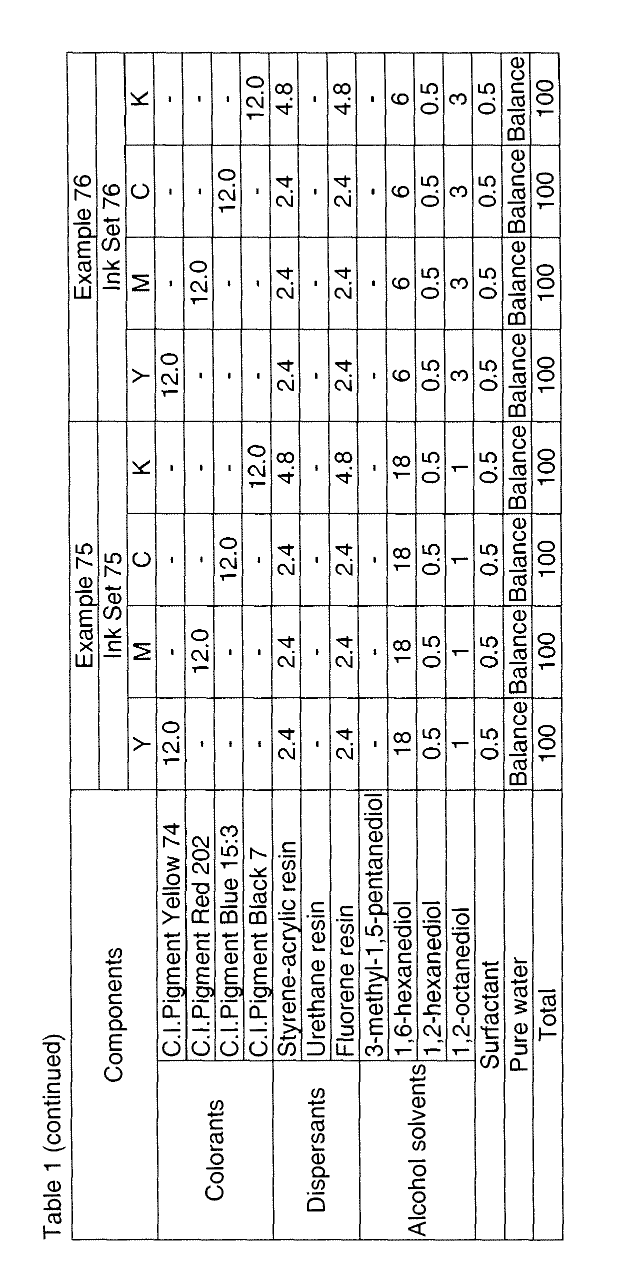

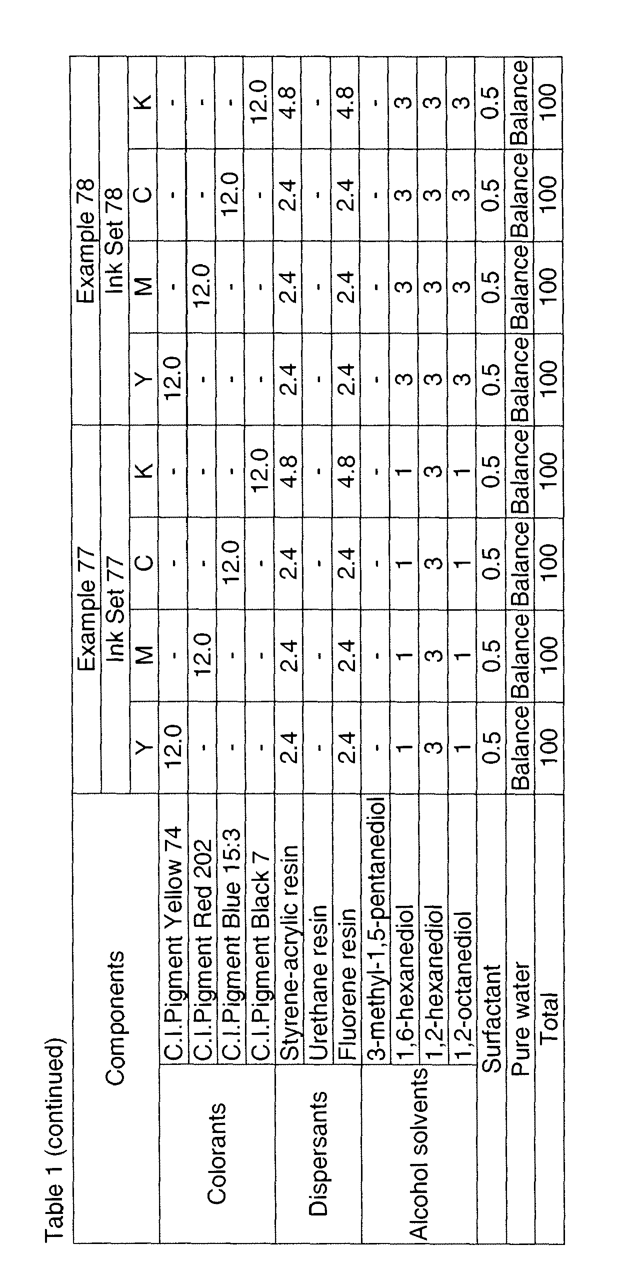

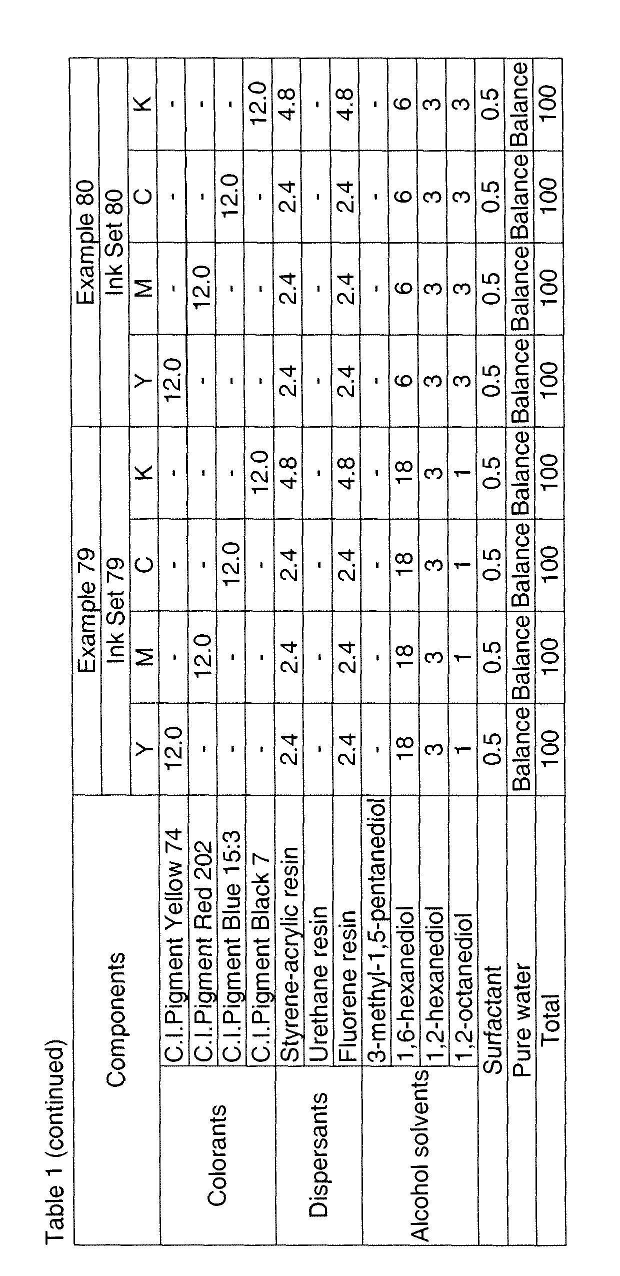

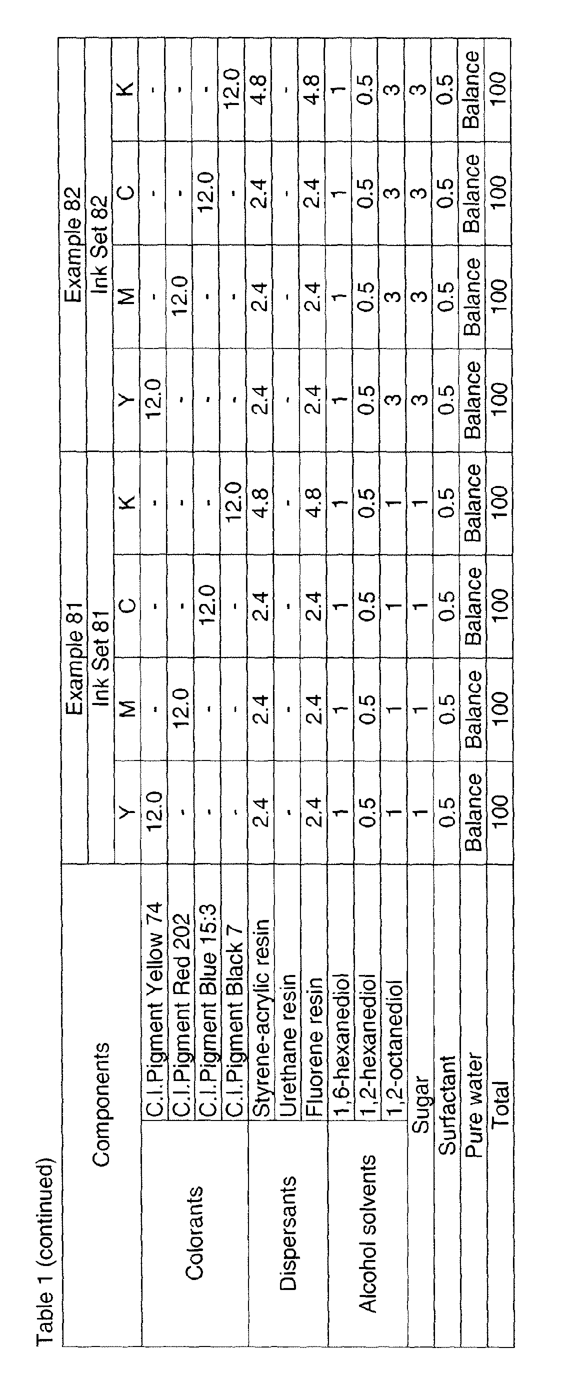

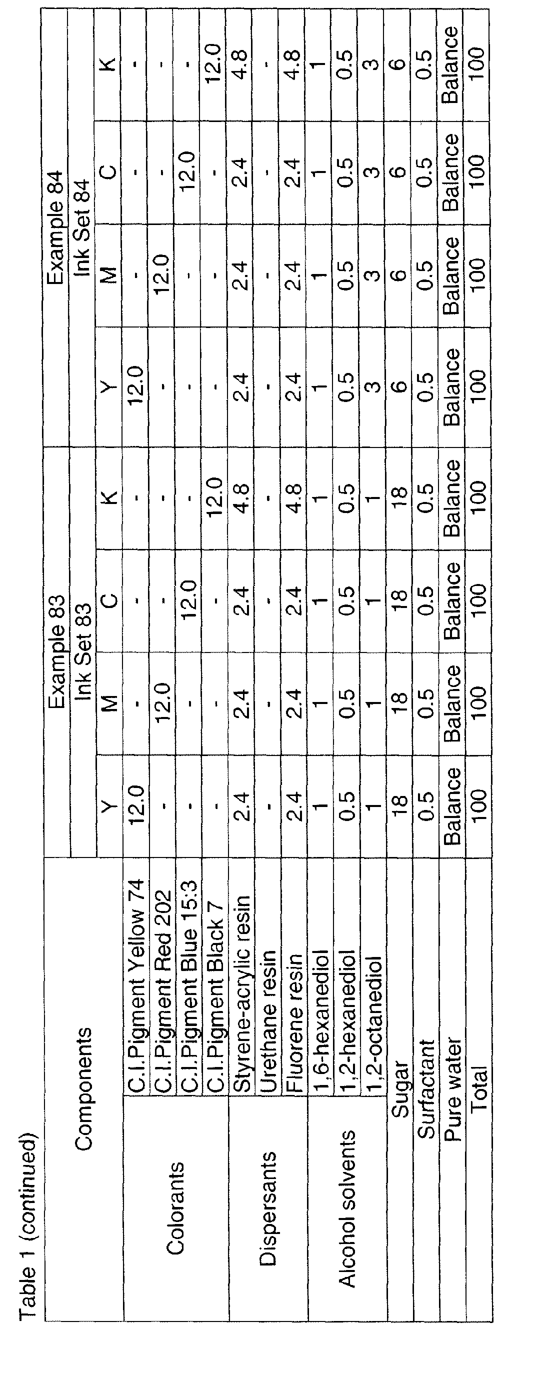

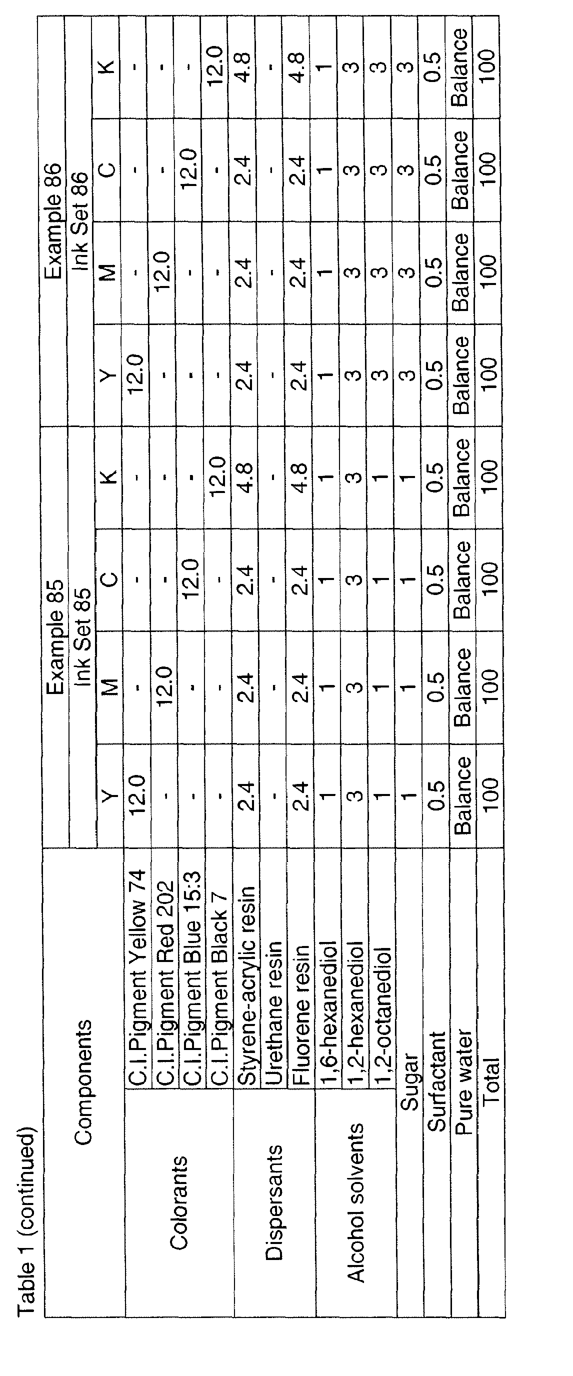

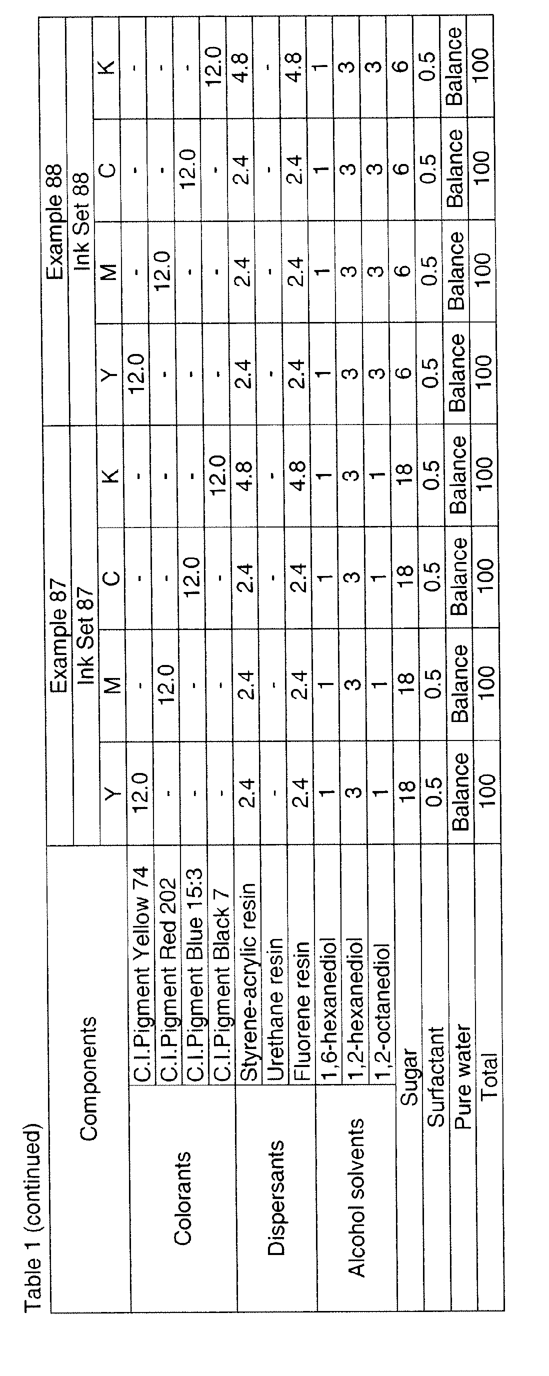

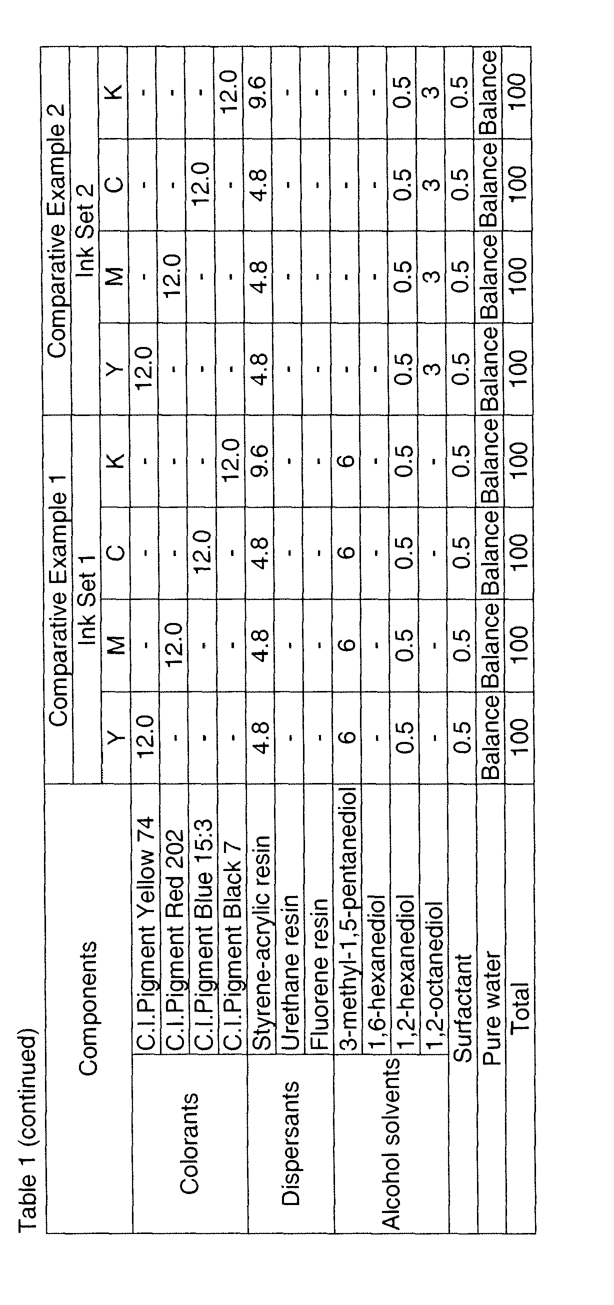

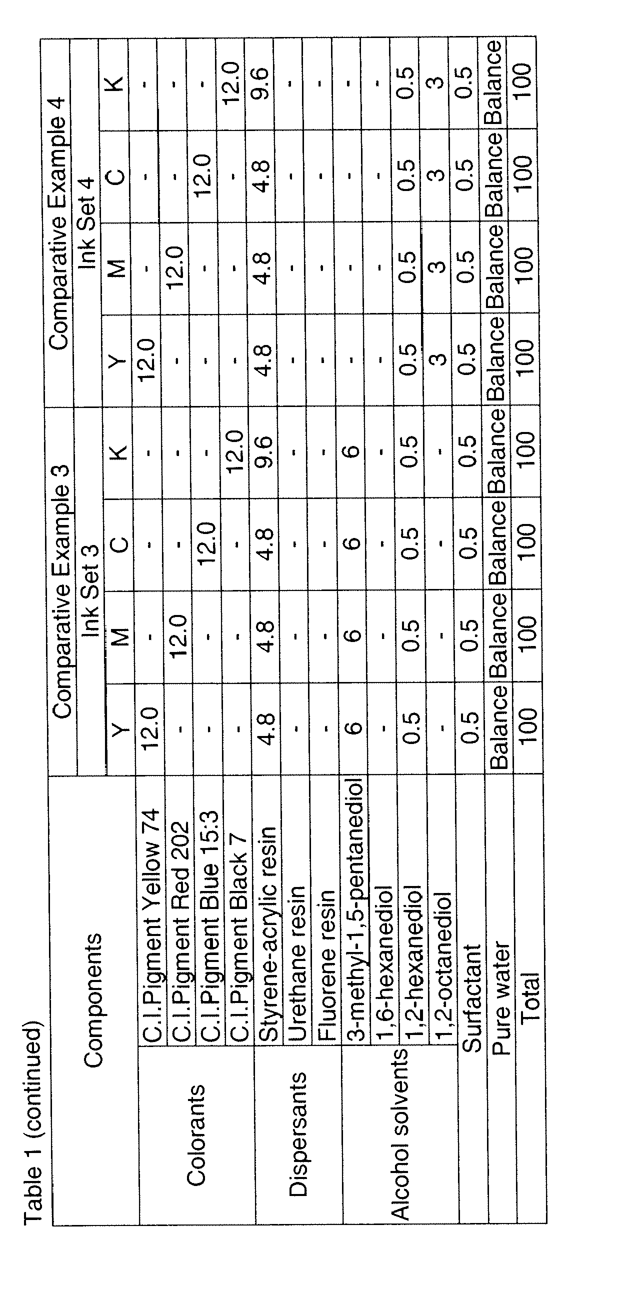

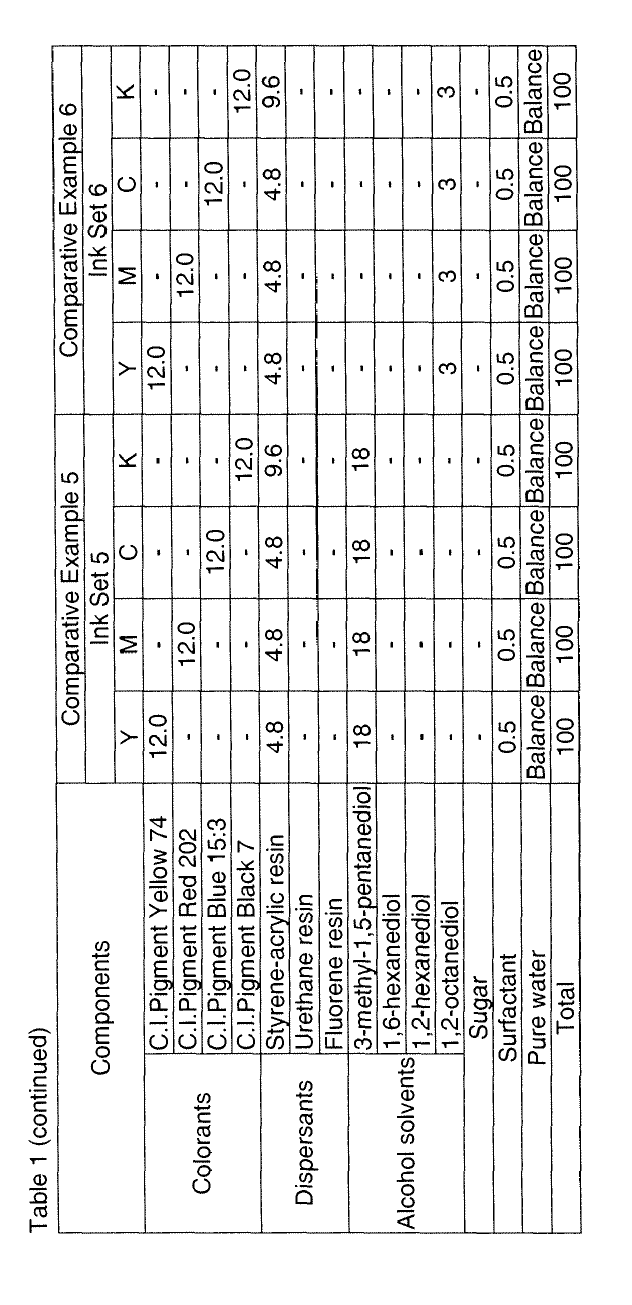

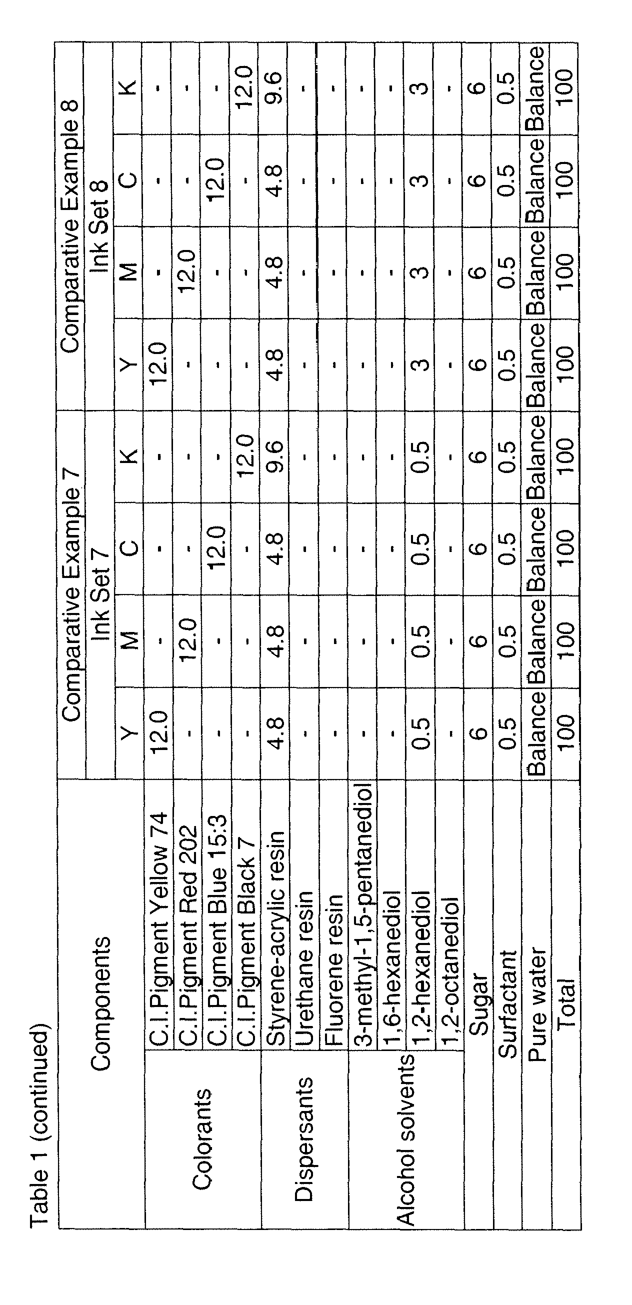

Ink sets were prepared from Ink Compositions Y, M, C, and K prepared as described above and were then filled into ink cartridges. The ink cartridges were installed in an ink jet printer, PX-G920, available from Seiko Epson Corporation, thereby allowing recording at 720 dpi in the main scanning (head moving) direction and 360 dpi in the sub-scanning (recording medium transport) direction. The voltage of the ink jet printer was adjusted such that the weight of each landing dot was about 10 ng. A 720 × 360 dpi solid image was printed on a sheet of recording paper, OKT+ (available from Oji Paper Co., Ltd.), having an area weight of about 128 g/m² in a single operation at 720 × 360 dpi. Printing was performed in a normal temperature, normal humidity environment. The amount of ink applied to the recording paper sheet was about 2.6 mg per square inch. The distance between the recording paper sheet and a print head was 3 mm.

Obtained images were evaluated in accordance with the following standards:
A: an image having no aggregation spot or white streak due to filling failure,
B: an image having no aggregation spot but a white streak due to filling failure, and
C: an image having an aggregation spot and a white streak due to filling failure.
The evaluation results were as summarized in Table 2.

The ink compositions prepared as described above were evaluated for viscosity. In particular, each ink composition was measured for viscosity at 20°C with a vibratory viscometer, MV 100, available from Yamaichi Electronics Co., Ltd. one hour after the preparation of the ink composition. Evaluation standards were as follows:
AA: an ink composition with a viscosity of not more than 4 mPa·s,
A: an ink composition with a viscosity of more than 4 mPa·s to not more than 6 mPa·s,
B: an ink composition with a viscosity of more than 6 mPa·s to not more than 8 mPa·s, and
C: an ink composition with a viscosity of more than 8 mPa·s to not more than 10 mPa·s.
The evaluation results were as summarized in Table 2.

Printing was performed in the same manner as described above except that recording media used were sheets of recording paper, OKT+ (available from Oji Paper Co., Ltd.), having an area weight of about 104.7 g/m². Each obtained print was left in an environment having a temperature of 25°C and a relative humidity of 40% for 24 hours in such a manner that the print was placed on a flat desk with the printed surface of the print directed upward, whereby the print was naturally dried. The distances between the desk and the four corners of the print that was curled up were measured and were then averaged. The prints were evaluated in accordance with the following standards:
A: a print with an average corner-to-desk distance of less than 5 mm,
B: a print with an average corner-to-desk distance of not less than 5 mm to less than 10 mm,
C: a print with an average corner-to-desk distance of not less than 10 mm to less than 20 mm, and
D: a print with an average corner-to-desk distance of not less than 20 mm.

The ink cartridges and the ink jet printer were used to evaluate the ink compositions for clogging elimination. After an ink change button of the ink exchange button was pushed, the ink jet printer was unplugged. After a head cap was removed from the ink jet printer, the ink jet printer was left in an environment having a temperature of 40°C and a relative humidity of 15% for one day.

Nozzles of the ink jet printer were repeatedly cleaned until all the nozzles exhibited initial ejection performance. The ink compositions were evaluated for clogging elimination in accordance with the following standards:
A: an ink composition capable of eliminating clogging by repeating cleaning three times,
B: an ink composition capable of eliminating clogging by repeating cleaning six times,
C: an ink composition capable of eliminating clogging by repeating cleaning 12 times, and
D: an ink composition incapable of eliminating clogging by repeating cleaning 12 times.
The evaluation results were as summarized in Table 2.

An aqueous solution containing 10% by weight of 1,2-octanediol, which is a water-insoluble alkanediol, was prepared. In the aqueous solution, 1,2-octanediol was not completely dissolved. Therefore, the aqueous solution was cloudy.

Five alcohol solvents were each added to 10 g of the aqueous solution until the aqueous solution became transparent. The five alcohol solvents were 1,6-hexanediol (hereinafter referred to as 1,6-HED), 3-methyl-1,5-pentanediol (hereinafter referred to as 3MPED), 1,5-pentanediol (hereinafter referred to as 1,5-PED), 1,2-hexanediol (hereinafter referred to as HED), and 2,2'-dimethylpropanediol (hereinafter referred to as 2MPRD).

Another aqueous solution containing 10% by weight of 1,2-octanediol and 10% by weight of 1,2-hexanediol, which is a water-soluble alkanediol, was prepared. The five alcohol solvents were added to this aqueous solution in the same manner as described above until this aqueous solution became transparent.

The figure shows the amount (g) of each alcohol solvent that was added to a corresponding one of the aqueous solutions until the corresponding aqueous solution became transparent, that is, a water-soluble alkanediol was completely dissolved.

As is clear from the figure, 1,6-HED, 3MPED, 1,5-PED, and 2MPRD, which are water-soluble symmetrical end-capped alkanediols, are more capable of dissolving 1,2-octanediol in the aqueous solution containing the two components, that is, 1,2-octanediol and 1,2-hexanediol than HED.

The printed surfaces of the prints obtained as described above were rubbed with fingers three minutes after printing. The ink compositions were evaluated for fixability in accordance with the following standards:
A: a print from which no colorant is removed, and
B: a print from which a colorant is removed.
The evaluation results were as summarized in Table 2.

Prints obtained by the use of ink sets prepared in Examples 72 to 88 and Comparative Examples 1 to 8 were measured for gloss at 60°C with a gloss-meter, MINOLTA MULTI GLOSS 268, available from Konica Minolta Holdings, Inc. These prints were evaluated for gloss in accordance with the following standards:
A: a print with a gloss of not less than 60, and
B: a print with a gloss of less than 60.
The evaluation results were as summarized in Table 2.

**Table 2**

| | Ink aggregation spots and filling ability | Ink initial viscosity | Curling | Clogging elimination | Initial fixability | Gloss |
|---|---|---|---|---|---|---|
| Example 1 | B | A | D | C | A | - |
| Example 2 | A | B | D | B | A | - |
| Example 3 | C | C | B | A | B | - |
| Example 4 | A | B | C | A | A | - |
| Example 5 | B | B | D | C | A | - |
| Example 6 | A | B | D | B | A | - |
| Example 7 | C | C | B | A | B | - |
| Example 8 | A | B | C | A | A | - |
| Example 9 | B | A | D | C | A | - |
| Example 10 | A | B | D | B | A | - |
| Example 11 | C | C | B | A | B | - |
| Example 12 | A | B | C | A | A | - |
| Example 13 | B | B | D | C | A | - |
| Example 14 | A | B | D | B | A | - |
| Example 15 | C | C | B | A | B | - |
| Example 16 | A | B | C | A | A | - |
| Example 17 | B | A | D | C | A | - |
| Example 18 | A | B | D | B | A | - |
| Example 19 | C | C | B | A | B | - |
| Example 20 | A | B | C | A | A | - |
| Example 21 | B | B | D | C | A | - |
| Example 22 | A | A | D | B | A | - |
| Example 23 | C | C | B | A | B | - |
| Example 24 | A | B | C | A | A | - |
| Example 25 | B | A | D | C | A | - |
| Example 26 | A | B | D | B | A | - |
| Example 27 | C | C | B | A | B | - |
| Example 28 | A | B | C | A | A | - |
| Example 29 | B | B | D | C | A | - |
| Example 30 | A | A | D | B | A | - |
| Example 31 | C | C | B | A | B | - |
| Example 32 | A | A | C | A | A | - |
| Example 33 | B | A | D | B | A | - |
| Example 34 | A | B | D | A | A | - |
| Example 35 | C | C | B | A | B | - |
| Example 36 | A | B | C | A | A | - |
| Example 37 | B | B | D | C | A | - |
| Example 38 | A | B | D | B | A | - |
| Example 39 | C | C | B | A | B | - |
| Example 40 | A | B | C | A | A | - |
| Example 41 | B | A | D | B | A | - |
| Example 42 | A | B | D | A | A | - |
| Example 43 | C | C | B | A | B | - |
| Example 44 | A | B | C | A | A | - |
| Example 45 | B | B | D | C | A | - |
| Example 46 | A | B | D | B | A | - |
| Example 47 | C | C | B | A | B | - |
| Example 48 | A | B | C | A | A | - |
| Example 49 | B | A | D | B | A | - |
| Example 50 | A | B | D | A | A | - |
| Example 51 | C | C | B | A | B | - |
| Example 52 | A | B | C | A | A | - |
| Example 53 | B | B | D | C | A | - |
| Example 54 | A | A | D | B | A | - |
| Example 55 | C | C | B | A | B | - |
| Example 56 | A | B | C | A | A | - |
| Example 57 | B | A | D | B | A | - |
| Example 58 | A | B | D | A | A | - |
| Example 59 | C | C | B | A | B | - |
| Example 60 | A | B | C | A | A | - |
| Example 61 | B | B | D | C | A | - |
| Example 62 | A | A | D | B | A | - |
| Example 63 | C | C | B | A | B | - |
| Example 64 | A | A | C | A | A | - |
| Example 65 | B | A | D | B | A | |
| Example 66 | A | A | D | A | A | |
| Example 67 | C | B | B | A | B | |
| Example 68 | A | A | C | A | A | |
| Example 69 | B | A | D | C | A | |
| Example 70 | A | A | D | B | A | |
| Example 71 | C | B | B | A | B | |
| Example 72 | A | A | C | A | A | B |
| Example 73 | B | A | D | B | A | B |
| Example 74 | A | AA | D | A | A | B |
| Example 75 | C | B | B | A | B | B |
| Example 76 | A | A | C | A | A | B |
| Example 77 | B | A | D | C | A | B |
| Example 78 | A | A | D | B | A | B |
| Example 79 | C | B | B | A | B | B |
| Example 80 | A | A | C | A | A | B |
| Example 81 | B | A | D | A | A | A |
| Example 82 | A | AA | C | A | A | A |
| Example 83 | C | C | A | A | B | A |
| Example 84 | A | B | B | A | A | A |
| Example 85 | B | A | D | B | A | A |
| Example 86 | A | A | C | A | A | A |
| Example 87 | C | C | A | A | B | A |
| Example 88 | A | B | B | A | A | A |
| Comparative Example 1 | D | A | C | C | A | B |
| Comparative Exam pie 2 | B | B | D | D | B | B |
| Comparative Example 3 | D | B | C | B | A | B |
| Comparative Example 4 | A | B | D | C | B | B |
| Comparative Example 5 | D | A | B | A | B | B |
| Comparative Example 6 | B | C | D | D | B | B |
| Comparative Example 7 | D | A | B | B | A | A |
| Comparative Example 8 | D | C | B | C | A | A |

## Claims

1. An ink composition for ink jet recording, comprising:
a colorant;
water;
an alcohol solvent; and
a surfactant,
wherein the alcohol solvent contains a water-insoluble alkanediol, a water-soluble 1,2-alkanediol, and a water-soluble symmetrical end-capped alkanediol and the surfactant is a gemini surfactant.

2. The ink composition according to Claim 1, wherein the gemini surfactant is a double-chain, triple-hydrophilic group surfactant containing a linker having a hydrophilic group and a pair of single-chain surfactant moieties, connected to each other through the linker, having hydrophilic groups.

3. The ink composition according to Claim 1 or 2, wherein the gemini surfactant is represented by the following formula: 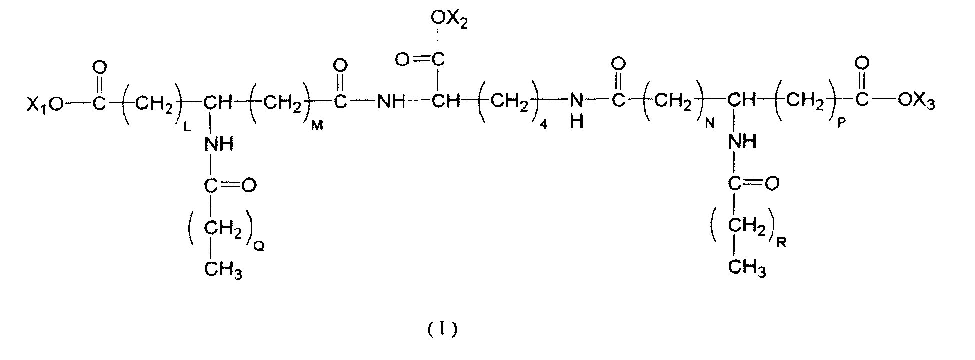 wherein X₁, X₂, and X₃ independently represent a hydrogen atom or an alkali metal but do not simultaneously represent any hydrogen atom or alkali metal; L and M independently represent 0 or 2 but do not simultaneously represent 0 or 2; N and P independently represent 0 or 2 but do not simultaneously represent 0 or 2; and Q and R each represents an integer of 8 to 18.

4. The ink composition according to any of Claims 1 to 3, wherein the water-insoluble alkanediol contains seven or more carbon atoms, and wherein the water-insoluble alkanediol is preferably 1,2-octanediol.

5. The ink composition according to any of Claims 1 to 4, wherein the water-soluble 1,2-alkanediol contains six or less carbon atoms, and wherein the water-soluble 1,2-alkanediol is preferably one or more selected from the group consisting of 1,2-hexanediol, 4-methyl-1 ,2-pentanediol, and 3,3-dimethyl-1 ,2-butanediol.

6. The ink composition according to any of Claims 1 to 5, wherein the water-soluble symmetrical end-capped alkanediol contains three or more carbon atoms, and wherein the water-soluble symmetrical end-capped alkanediol is preferably one or more selected from the group consisting of 2-methyl-1 ,3-propanediol, 3-methyl-1,5-pentanediol, 1,5-pentanediol, and 1,6-hexanediol.

7. The ink composition according to any of Claims 1 to 6, wherein the content of the water-insoluble alkanediol in the ink composition is 1% to 3% by weight.

8. The ink composition according to any of Claims 1 to 7, wherein the content of the water-soluble 1,2-alkanediol in the ink composition is 0.5% to 3.0% by weight.

9. The ink composition according to any of Claims 1 to 8, wherein the content of the water-soluble symmetrical end-capped alkanediol in the ink composition is 1% to 6% by weight.

10. The ink composition according to any of Claims 1 to 9, wherein the content of the gemini surfactant in the ink composition is 0.01 % to 1.0% by weight.

11. The ink composition according to any of Claims 1 to 10, wherein the colorant contains a pigment and a dispersant capable of dispersing the pigment in the ink composition.

12. The ink composition according to Claim 11, wherein the dispersant contains at least one selected from the group consisting of a styrene-acrylic acid copolymer resin, an oxyethyl acrylate resin, a urethane resin and a fluorene resin, and wherein the content of the dispersant in the ink composition is preferably 20% to 50% by weight.

13. The ink composition according to any of Claims 1 to 12, wherein the colorant is a pigment and the pigment has a solid concentration of 9% by weight or more.

14. An ink jet recording method comprising:
ejecting droplets of the ink composition according to any of Claims 1 to 13; and
applying the droplets to a recording medium to perform printing.

15. The ink jet recording method according to Claim 14, wherein the recording medium is a sheet of printing paper or synthetic paper made of a synthetic resin.
